# EUROPEAN PATENT APPLICATION

(11) **EP 4 633 095 A1**
(43) Date of publication of application: **15.10.2025**
(21) Application number: 22967640.8
(22) Date of filing: 09.12.2022
(51) Int. Cl.: H04L 27/00

(54) **WIRELESS COMMUNICATION METHOD AND DEVICES**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); SHI, Zhihua, Dongguan, Guangdong 523860 (CN); LIU, Wendong, Dongguan, Guangdong 523860 (CN)
(74) Representative: RGTH
(86) International application number: PCT/CN2022/138003
(87) International publication number: WO 2024/119492

(57) **Abstract**

Provided in the embodiments of the present application are a wireless communication method and devices. The method comprises: on the basis of a measurement result corresponding to a first monitoring signal set or a confidence coefficient corresponding to spatial filters predicted in a first prediction data set, a first communication device monitors the prediction performance of a first network model, so as to reduce or avoid the measurement overhead for model performance monitoring, thus improving the model monitoring performance.

## Description

### TECHNICAL FIELD

Embodiments of this application relate to the communications field, and more specifically, to a wireless communication method and a wireless communications device.

### BACKGROUND

In a new radio (New Radio, NR) system, artificial intelligence (Artificial Intelligence, AI) or machine learning (machine learning, ML) may be introduced to improve system performance. For example, an AI or ML model is introduced for beam prediction, that is, a trained AI or ML model is used for beam prediction, thereby improving performance of a beam management system. However, when beam prediction accuracy (Beam Prediction Accuracy, BAP) of the AI or ML model is excessively low, the performance of the beam management system is inevitably affected. In this case, the AI or ML model may be determined to be inapplicable, and the AI or ML model may be adjusted by using a life cycle management (Life Circle Management, LCM) mechanism of the AI or ML model. Specifically, how to monitor prediction performance of the AI or ML model and how to adjust the AI or ML model based on the LCM mechanism are problems to be resolved.

### SUMMARY

Embodiments of this application provide a wireless communication method and a wireless communications device. A first communications device may monitor prediction performance of a first network model based on a measurement result corresponding to a first monitoring signal set or a degree of confidence corresponding to a predicted spatial filter in a first prediction data set, thereby reducing or preventing measurement overheads for model performance monitoring, and thus improving model monitoring efficiency.

According to a first aspect, a wireless communication method is provided, where the method includes:
inputting, by a first communications device, a first measurement data set into a first network model, to output a first prediction data set, where the first measurement data set includes at least one of the following: identifier information of F spatial filters, or link quality information corresponding to F spatial filters; and the first prediction data set includes at least one of the following: identifier information of K predicted spatial filters in W spatial filters, or link quality information corresponding to K predicted spatial filters in W spatial filters, where F, W, and K are all positive integers, and K < W; and
monitoring, by the first communications device, prediction performance of the first network model according to a measurement result corresponding to a first monitoring signal set, where the first monitoring signal set includes M reference signals, each reference signal in the M reference signals and a reference signal corresponding to at least one spatial filter in the W spatial filters meet a spatial QCL requirement, and M is a positive integer; or
monitoring, by the first communications device, prediction performance of the first network model according to degrees of confidence corresponding to the K spatial filters that are outputted by the first network model.

According to a second aspect, a communications device is provided and configured to execute the method in the first aspect.

Specifically, the communications device includes a function module configured to execute the method in the first aspect.

According to a third aspect, a communications device is provided. The communications device includes a processor and a memory, where the memory is configured to store a computer program, and the processor is configured to invoke and run the computer program stored in the memory, so that the communications device executes the method in the first aspect.

According to a fourth aspect, an apparatus is provided and configured to implement the method in the first aspect.

Specifically, the apparatus includes a processor, configured to invoke a computer program from a memory and run the computer program, so that a device on which the apparatus is installed executes the method in the first aspect.

According to a fifth aspect, a computer-readable storage medium is provided and configured to store a computer program, where the computer program causes a computer to execute the method in the first aspect.

According to a sixth aspect, a computer program product is provided. The computer program product includes computer program instructions, where the computer program instructions cause a computer to execute the method in the first aspect.

According to a seventh aspect, a computer program is provided. When the computer program runs on a computer, the computer executes the method in the first aspect.

By using the foregoing technical solutions, a first communications device can monitor prediction performance of a first network model based on a measurement result corresponding to a first monitoring signal set or a degree of confidence corresponding to a predicted spatial filter in a first prediction data set, thereby reducing or preventing measurement overheads for model performance monitoring, and thus improving model monitoring efficiency.

### BRIEF DESCRIPTION OF DRAWINGS

FIG. 1 is a schematic diagram of a communications system architecture to which embodiments of this application are applied.
FIG. 2 is a schematic diagram of connection between neurons of a neural network according to this application.
FIG. 3 is a schematic structural diagram of a neural network according to this application.
FIG. 4 is a schematic diagram of a convolutional neural network according to this application.
FIG. 5 is a schematic structural diagram of an LSTM unit according to this application.
FIG. 6 is a schematic diagram of a downlink beam sweeping process according to this application.
FIG. 7 is a schematic diagram of another downlink beam sweeping process according to this application.
FIG. 8 is a schematic diagram of still another downlink beam sweeping process according to this application.
FIG. 9 is a schematic diagram of a spatial domain beam prediction model according to this application.
FIG. 10 is a schematic diagram of another spatial domain beam prediction model according to this application.
FIG. 11 is a schematic diagram of a time domain beam prediction model according to an embodiment of this application.
FIG. 12 is a schematic flowchart of a wireless communication method according to an embodiment of this application.
FIG. 13 is a schematic diagram of a QCL type D relationship according to an embodiment of this application.
FIG. 14 is a flowchart of model monitoring on a UE side in which the UE side determines an LCM operation according to an embodiment of this application.
FIG. 15 is a flowchart of model monitoring on a UE side in which an NW side determines an LCM operation according to an embodiment of this application.
FIG. 16 is a flowchart of model monitoring on an NW side in which an NW side determines an LCM operation according to an embodiment of this application.
FIG. 17 is a schematic block diagram of a communications device according to an embodiment of this application.
FIG. 18 is a schematic block diagram of a communications device according to an embodiment of this application.
FIG. 19 is a schematic block diagram of an apparatus according to an embodiment of this application.
FIG. 20 is a schematic block diagram of a communications system according to an embodiment of this application.

### DESCRIPTION OF EMBODIMENTS

The following describes the technical solutions in embodiments of this application with reference to the accompanying drawings in embodiments of this application. Apparently, the described embodiments are some rather than all of embodiments of this application. For embodiments of this application, all other embodiments obtained by a person of ordinary skill in the art without creative efforts fall within the protection scope of this application.

The technical solutions in embodiments of this application may be applied to various communications systems, for example, a global system for mobile communication (Global System of Mobile communication, GSM), a code division multiple access (Code Division Multiple Access, CDMA) system, a wideband code division multiple access (Wideband Code Division Multiple Access, WCDMA) system, general packet radio service (General Packet Radio Service, GPRS), a long-term evolution (Long Term Evolution, LTE) system, an advanced long-term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Networks, NTN) system, a universal mobile telecommunications system (Universal Mobile Telecommunications system, UMTS), a wireless local area network (Wireless Local Area Networks, WLAN), an internet of things (internet of things, IoT), wireless fidelity (Wireless Fidelity, WiFi), a 5th-generation (5th-Generation, 5G) system, a 6th-generation (6th-Generation, 6G) system, or another communications system.

Generally, a quantity of connections supported by a conventional communications system is limited and is also easy to implement. However, with development of communications technologies, a mobile communications system not only supports conventional communication, but also supports, for example, device-to-device (Device to Device, D2D) communication, machine to machine (Machine to Machine, M2M) communication, machine-type communication (Machine Type Communication, MTC), vehicle-to-vehicle (Vehicle to Vehicle, V2V) communication, sidelink (sidelink, SL) communication, or vehicle-to-everything (Vehicle to everything, V2X) communication. Embodiments of this application may also be applied to these communications systems.

In some embodiments, the communications system in embodiments of this application may be applied to a carrier aggregation (Carrier Aggregation, CA) scenario, a dual connectivity (Dual Connectivity, DC) scenario, a standalone (Standalone, SA) networking scenario, or a non-standalone (Non-Standalone, NSA) networking scenario.

In some embodiments, the communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a non-shared spectrum.

In some embodiments, the communications system in embodiments of this application may be applied to an FR1 frequency band (corresponding to a frequency band range of 410 MHz to 7.125 GHz), or may be applied to an FR2 frequency band (corresponding to a frequency band range of 24.25 GHz to 52.6 GHz), or may be applied to a new frequency band, for example, corresponding to a frequency band range of 52.6 GHz to 71 GHz or corresponding to a high frequency band range of 71GHz to 114.25 GHz.

Embodiments of this application are described with reference to a network device and a terminal device. The terminal device may also be referred to as a user equipment (User Equipment, UE), an access terminal, a subscriber unit, a subscriber station, a mobile site, a mobile station, a remote station, a remote terminal, a mobile device, a user terminal, a terminal, a wireless communications device, a user agent, a user apparatus, or the like.

The terminal device may be a station (STATION, ST) in a WLAN, may be a cellular phone, a cordless phone, a session initiation system (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (Public Land Mobile Network, PLMN), or the like.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (Mobile Phone), a pad (Pad), a computer with a wireless transceiver function, a virtual reality (Virtual Reality, VR) terminal device, an augmented reality (Augmented Reality, AR) terminal device, a wireless terminal device in industrial control (industrial control), a wireless device in self-driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), a vehicle-mounted communications device, a wireless communications chip, an application-specific integrated circuit (application specific integrated circuit, ASIC), a system-on-chip (System on Chip, SoC), or the like.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that focus on only a specific type of application function and are necessary to cooperate with another device such as a smart phone for use, for example, various smart bracelets and smart jewelries for physical sign monitoring.

In embodiments of this application, the network device may be a device configured to communicate with a mobile device. The network device may be an access point (Access Point, AP) in a WLAN, may be a base transceiver station (Base Transceiver Station, BTS) in GSM or CDMA, may be a NodeB (NodeB, NB) in WCDMA, or may be an evolutional Node B (Evolutional Node B, eNB, or eNodeB) in LTE, or a relay station or an access point, or a vehicle-mounted device, a wearable device, a network device or gNodeB (gNB) in an NR network, or a transmission-reception point (Transmission Reception Point, TRP), or a network device in a future evolved PLMN, or a network device in an NTN, or the like.

By way of example rather than limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments, the network device may alternatively be a base station disposed in a location such as land or water.

In embodiments of this application, the network device may provide a service for a cell. The terminal device communicates with the network device by using a transmission resource (for example, a frequency resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have a characteristic of a small coverage and low transmit power, and are applicable to providing a high-rate data transmission service.

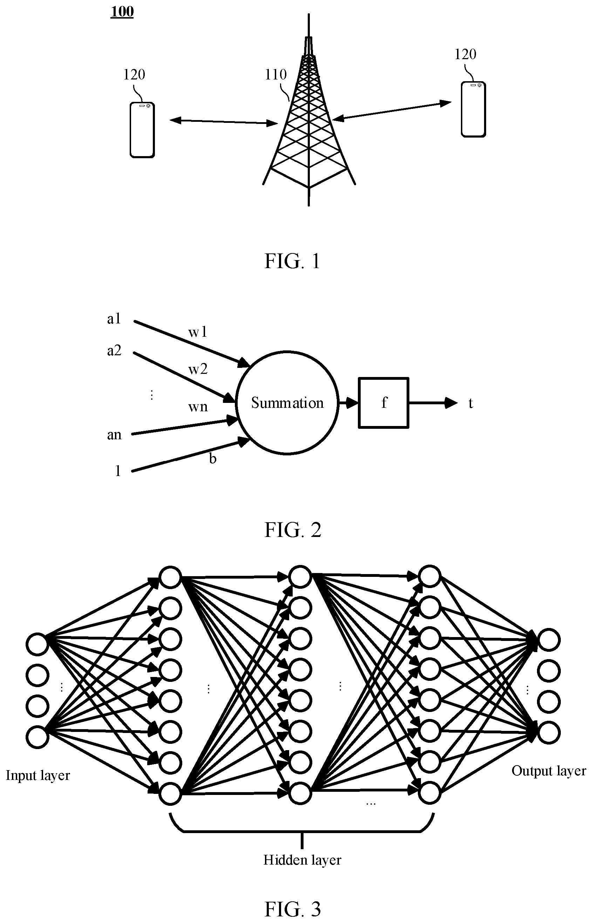

For example, FIG. 1 shows a communications system 100 to which embodiments of this application are applied. The communications system 100 may include a network device 110, and the network device 110 may be a device that communicates with a terminal device 120 (or referred to as a communications terminal or a terminal). The network device 110 may provide communication coverage for a specific geographic area, and may communicate with a terminal device within the coverage.

FIG. 1 exemplarily shows one network device and two terminal devices. In some embodiments, the communications system 100 may include a plurality of network devices, and another quantity of terminal devices may be included within coverage of each network device, which is not limited in embodiments of this application.

In some implementations, the communications system 100 may further include another network entity such as a network controller or a mobility management entity. This is not limited in embodiments of this application.

It should be understood that in embodiments of this application, a device having a communication function in a network or a system may be referred to as a communications device. The communications system 100 shown in FIG. 1 is used as an example. The communications device may include a network device 110 and a terminal device 120 that have a communication function. The network device 110 and the terminal device 120 may be the foregoing specific devices, and details are not described herein again. The communications device may further include another device in the communications system 100, such as a network controller or a mobility management entity. This is not limited in embodiments of this application.

It should be understood that the terms "system" and "network" may often be used interchangeably herein. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that this specification relates to a first communications device and a second communications device. The first communications device may be a terminal device, such as a mobile phone, a machine facility, a customer-premises equipment (Customer Premise Equipment, CPE), an industrial device, or a vehicle. The second communications device may be a peer communications device of the first communications device, such as a network device, a mobile phone, an industrial device, or a vehicle. In embodiments of this application, the first communications device may be a terminal device, and the second communications device may be a network device (that is, uplink communication or downlink communication). Alternatively, the first communications device may be a first terminal, and the second communications device may be a second terminal (that is, sidelink communication).

The terms used in implementations of this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

It should be understood that, the "indication" mentioned in embodiments of this application may be a direct indication or an indirect indication, or indicate an association. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association between A and B.

In the descriptions of embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, the "predefining" and "pre-configuration" may be implemented by pre-storing a corresponding code or table in a device (for example, including the terminal device and the network device) or in other manners that may be used for indicating related information, and a specific implementation thereof is not limited in this application. For example, predefining may indicate being defined in a protocol.

In embodiments of this application, the "protocol" may refer to a standard protocol in the communications field, which may be, for example, an evolution of an existing LTE protocol, an NR protocol, a Wi-Fi protocol, or a protocol related to another communications system. A protocol type is not limited in this application.

To better understand embodiments of this application, the following describes neural networks and machine learning related to this application.

A neural network (Neural Network, NN) is an operation model including a plurality of neuron nodes connected to each other. A connection between nodes represents a weighted value from an input signal to an output signal, which is referred to as a weight. Each node performs weighted summation (summation, SUM) on different input signals, and outputs the signals by using a specific activation function (f). FIG. 2 is a schematic diagram of a neuron structure, where a1, a2, ..., an indicate input signals, w1, w2, ..., wn represent weights, f represents an activation function, and t represents an output.

As shown in FIG. 3, a simple neural network includes an input layer, a hidden layer, and an output layer. Different outputs may be generated by using different connection manners of a plurality of neurons, weights, and activation functions, and then a mapping relationship from an input to an output is fitted. Each upper-level node is connected to all lower-level nodes of the upper-level node. The neural network is a fully connected neural network, and may also be referred to as a deep neural network (Deep Neural Network, DNN).

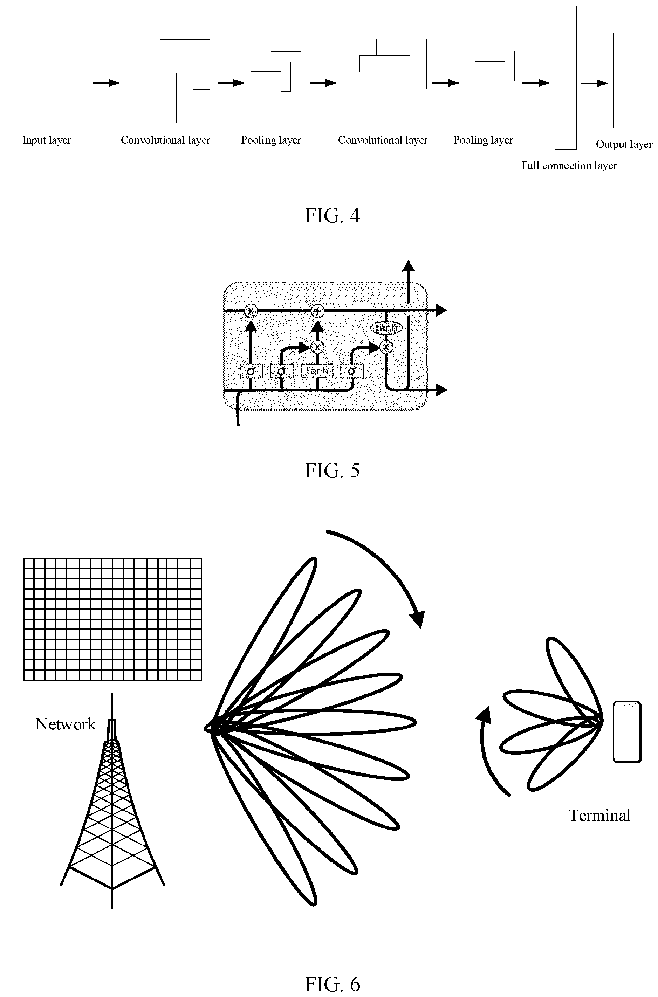

A basic structure of a convolutional neural network (Convolutional Neural Network, CNN) includes an input layer, a plurality of convolutional layers, a plurality of pooling layers, a full connection layer, and an output layer, as shown in FIG. 4. Each neuron of a convolutional kernel in a convolutional layer is locally connected to an input of the neuron, and a local maximum value feature or a local average value feature of a layer is extracted by introducing a pooling layer. In this way, a quantity of parameters of the network is effectively reduced, and local features are extracted, so that the convolutional neural network can rapidly converge, thereby obtaining excellent performance.

A deep neural network with a plurality of hidden layers is used for deep learning, which greatly improves a capability of the network to learn features and can fit a complex nonlinear mapping from an input to an output. Therefore, deep learning is widely applied in the field of voice and image processing. In addition to the deep neural network, for different tasks, common basic structures such as a convolutional neural network (Convolutional Neural Network, CNN) and a recurrent neural network (Recurrent Neural Network, RNN) may also be used for deep learning.

A basic structure of a convolutional neural network includes an input layer, a plurality of convolutional layers, a plurality of pooling layers, a full connection layer, and an output layer, as shown in FIG. 4. Each neuron of a convolutional kernel in a convolutional layer is locally connected to an input of the neuron, and a local maximum value feature or a local average value feature of a layer is extracted by introducing a pooling layer. In this way, a quantity of parameters of the network is effectively reduced, and local features are extracted, so that the convolutional neural network can rapidly converge, thereby obtaining excellent performance.

An RNN is a neural network for modeling sequence data, and has achieved significant achievements in the field of natural language processing, for example, applications such as machine translation and speech recognition. Specifically, a network device memorizes information in a past instant, and uses the information in calculation of a current output. That is, nodes between hidden layers are no longer connectionless but are connected to each other, and an input of a hidden layer includes not only an output of an input layer but also an output of the hidden layer in a previous instant. A common RNN includes structures such as a long short-term memory (Long Short-Term Memory, LSTM) and a gated recurrent unit (gated recurrent unit, GRU). FIG. 5 shows a basic LSTM unit structure, which may include a tanh activation function. Different from an RNN in which only a recent state is considered, a cell state of an LSTM determines which states should be maintained and which states should be forgotten, thereby overcoming a defect of a conventional RNN in long-term memory.

To better understand embodiments of this application, the following describes NR beam management related to this application.

In an NR system, millimeter-wave frequency band communication is introduced, and a corresponding beam management mechanism is also introduced. The mechanism includes uplink beam management and downlink beam management. Downlink beam management includes processes such as downlink beam sweeping (beam sweeping), beam measurement and reporting (measurement & reporting) of a terminal (UE), and downlink beam indication (beam indication) of a network (network, NW).

The downlink beam sweeping process may include three processes, that is, P1, P2, and P3 processes. The P1 process refers to that a network device sweeps different transmit beams, and the UE sweeps different receive beams. The P2 process refers to that the network device sweeps different transmit beams, and the UE uses a same receive beam. The P3 process refers to that the network device uses a same transmit beam, and the UE sweeps different receive beams. Generally, the network device completes the beam sweeping process by transmitting a downlink reference signal. Optionally, the downlink reference signal may include but is not limited to a synchronization signal block (Synchronization Signal Block, SSB) and/or a channel state information reference signal (Channel State Information Reference Signal, CSI-RS).

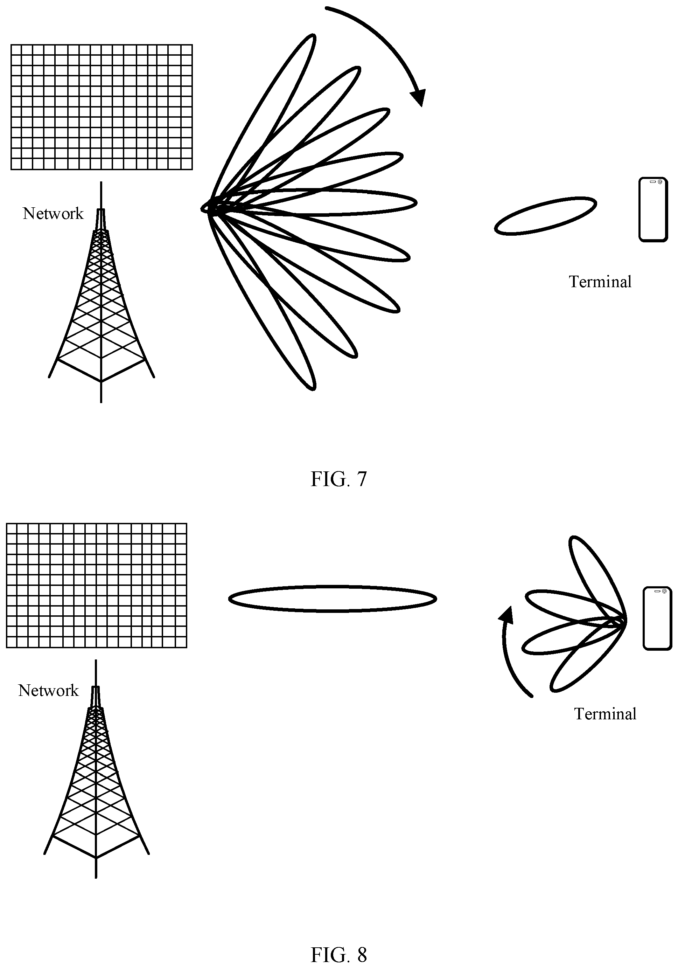

FIG. 6 is a schematic diagram of the P1 process (or referred to as a downlink full sweeping process), FIG. 7 is a schematic diagram of the P2 process, and FIG. 8 is a schematic diagram of the P3 process.

As shown in FIG. 6, in the P1 process, the network device traverses all transmit beams to transmit a downlink reference signal, and the UE side traverses all receive beams for measurement, to determine a corresponding measurement result.

As shown in FIG. 7, in the P2 process, the network device traverses all transmit beams to transmit a downlink reference signal, and the UE side performs measurement by using a specific receive beam, to determine a corresponding measurement result.

As shown in FIG. 8, in the P3 process, the network device may transmit a downlink reference signal by using a specific transmit beam, and the UE side traverses all receive beams for measurement, to determine a corresponding measurement result.

Conventional beam reporting in NR refers to that a UE selects K transmit beams with highest L1-RSRP by measuring layer 1 reference signal received power (Layer1 Reference Signal Receiving Power, L1-RSRP) values of different beams (or beam pairs), and reports the K transmit beams to an NW in a manner of uplink control information (Uplink Control Information, UCI). Herein, L1-RSRP may be replaced with another beam link indicator, such as a layer 1 signal to interference plus noise ratio (Layer1 Signal to Interference plus Noise Ratio, L1-SINR) or layer 1 reference signal received quality (Layer1 Reference Signal Received Quality, L1-RSRQ).

After learning an optimal beam reported by the terminal device, the network device may carry a transmission configuration indicator (Transmission Configuration Indicator, TCI) state (including a downlink reference signal as a reference transmit beam) by using medium access control (Media Access Control, MAC) or downlink control information (Downlink Control Information, DCI) signalling, to complete a beam indication for the UE. The UE performs downlink reception by using a receive beam corresponding to the transmit beam.

To better understand embodiments of this application, the following describes beam management based on AI or ML related to this application.

Beam management based on AI or ML may be downlink beam predication in spatial domain and time domain.

Beam prediction in spatial domain (also referred to as a beam management case 1 (BM-Case1)): spatial domain prediction of a downlink beam in a prediction data set A (set A) is performed by measuring a beam in a data set B (set B). The set B is a subset of the set A, or the set B and the set A are two different beam sets. The set B may be understood as a proper subset of a beam (or beam pair), and the set A may be understood as a universal set of a beam (or beam pair).

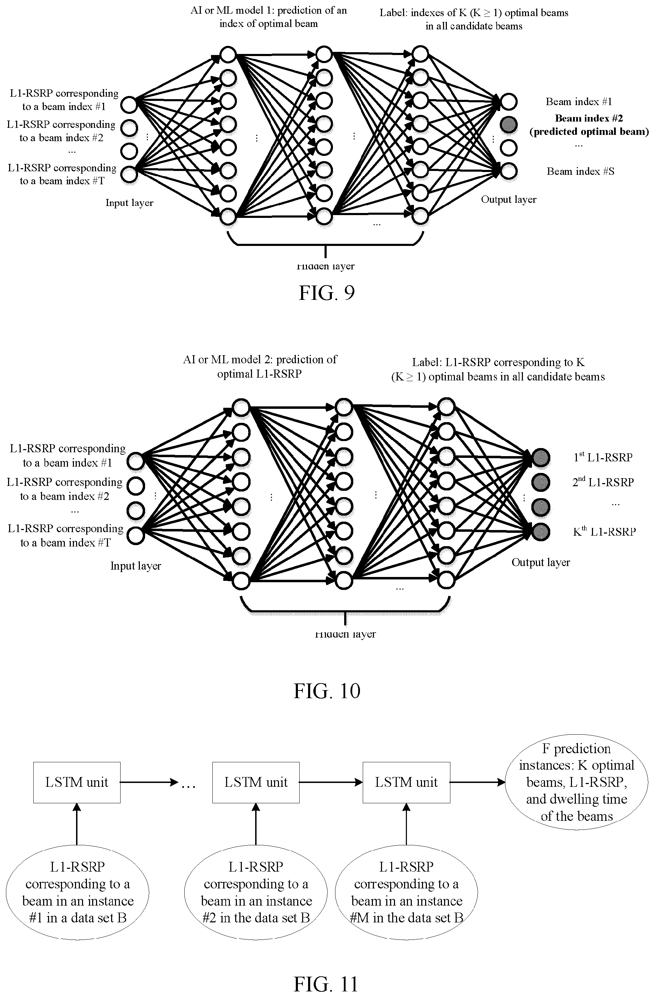

FIG. 9 schematically shows an input-output relationship of a beam prediction model. It may be considered that this model resolves a multi-classification problem, that is, a relationship in which a partial subset (that is, the set B) including L1-RSRP is inputted to output K optimal beams including L1-RSRP. A partial beam measurement set (that is, the set B includes some of L1-RSRP values measured by the universal set A) is used as an input of the model. Outputs of the model are indexes of K optimal beams selected from the universal set A, that is, K beams with highest L1-RSRP. Labels used by the model are indexes of the K optimal beams (that is, with the highest L1-RSRP) measured in the universal set A. Specifically, as shown in FIG. 9, a measurement data set B (the set B) includes L1-RSRP corresponding to T beam indexes, a prediction data set A (the set A) includes S beam indexes, and an AI or ML model 1 predicts the indexes of the K optimal beams (which is a beam index #2 in FIG. 9). It should be noted that a beam in FIG. 9 may be replaced with a beam pair. Specific descriptions of a beam pair are similar to those of a beam, and details are not described herein again.

FIG. 10 schematically shows an optimal beam quality prediction model, which resolves a linear regression problem. An input-output relationship of this model is a relationship in which a partial subset (that is, the set B) including L1-RSRP is inputted to output K optimal L1-RSRPs of the beams. An input of this model is the same as that of the beam prediction model in FIG. 9, and the model shown in FIG. 10 differs from the model shown in FIG. 9 in that outputs of this model are K (K ≥ 1) optimal L1-RSRP values. Labels are K optimal L1-RSRP values measured in a universal set (that is, the set A) and corresponding K beam indexes. Specifically, as shown in FIG. 10, a measurement data set B (the set B) includes L1-RSRP corresponding to T beam indexes, a prediction data set A (the set A) includes L1-RSRP corresponding to S beam indexes, and an AI or ML model 2 predicts K (K ≥ 1) optimal L1-RSRP values. It should be noted that a beam in FIG. 10 may be replaced with a beam pair. Specific descriptions of a beam pair are similar to those of a beam, and details are not described herein again.

Beam prediction in time domain (also referred to as a beam management case 2 (BM-Case2)): time domain prediction of a downlink beam in a prediction data set A (the set A) is performed by using a beam in a historical measurement data set B (the set B). The set B is a subset of the set A, or is the same as the set A, or is a subset of the set A. The set B may be understood as a partial subset of a beam (or beam pair), and the set A may be understood as a universal set of a beam (or beam pair).

Prediction of a beam (or beam pair) in time domain and prediction of performance of the beam (or beam pair) is used as an example. FIG. 11 shows a selected LSTM model. In terms of time sequence, the LSTM model may be understood as extending M instances (instances) as inputs, which is equivalent to cascading of M LSTM units. An input of each LSTM unit is L 1-RSRP of a beam (or beam pair) of an instance m (set Bm) in a data set B, where 1 ≤ m ≤ M.

It should be noted that an index of a beam (or beam pair) of the set Bm may be implicitly inputted in a fixed sorting manner of L1-RSRP. After performance of the M instances is inputted, the LSTM model may predict optimal beams (or beam pairs) of subsequent F instances, performance (that is, link quality information) of the optimal beams (or beam pairs), and dwelling time (dwelling time) of the optimal beams (or beam pairs).

To better understand embodiments of this application, the following describes performance monitoring of an AI or ML model related to this application.

Compared with conventional beam measurement, prediction performance of beam prediction based on an AI or ML model may be represented by beam prediction accuracy (Beam Prediction Accuracy, BAP). BAP is defined as a probability or a ratio (implemented based on statistics) that K optimal (Top-K, K ≥ 1) beams predicted by the AI or ML model include an optimal beam in real measurement.

When a prediction success rate of the AI or ML model is excessively low, performance of a beam management system is inevitably affected. In this case, the AI or ML model may be determined to be inapplicable, and the AI or ML model is adjusted by using an LCM (Life Circle Management) mechanism of the AI or ML model.

To better understand embodiments of this application, the following describes the problems resolved in this application.

If a beam sweeping process of NR is a downlink periodic full beam sweeping process, that is, a periodic P1 process (as shown in FIG. 6), a UE is necessary to periodically traverse all combinations of transmit beams and receive beams, causing high overheads and delays. For example, it is assumed that an NW defines 64 different downlink transmit directions (carried by a maximum of 64 SSBs) on an FR2, a UE simultaneously sweeps receive beams by using a plurality of antenna panels (including only one receive beam panel), and each antenna panel has four receive beams. In this case, the UE is necessary to measure at least 64 x 4 = 256 beam pairs. Correspondingly, downlink resource overheads of 256 resources are required. Therefore, an NR system defines beam prediction in spatial domain and time domain.

A success rate of beam prediction is affected by many factors, for example, a model is trained in a scenario of a cell A, but is not applicable to beam (or beam pair) configuration in a scenario of a cell B. Therefore, when a beam prediction capability of the model declines to a specific degree, an operation such as replacement, activation, deactivation, or updating of the model is performed according to the LCM mechanism, so that beam prediction performance of the model meets a basic requirement of beam management.

Specifically, for prediction of a beam (or beam pair) when the model is deployed on a UE side, the UE predicts K optimal beams (or beam pairs) in a set A by measuring a set B. For prediction of a Tx beam, the model outputs top K transmit beams. For prediction of a Tx-Rx beam pair, top K beam pairs outputted by the model further include top K transmit beams. To determine prediction accuracy of a beam (or beam pair), an NW configures a set A that is periodically or dynamically triggered, to allow the UE to measure all beams (or beam pairs) of the set A, thereby finding K beams (or beam pairs) with optimal performance in real measurement. Performance of beam prediction is determined by determining whether the top K beams (or beam pairs) predicted by the model include an optimal (Top-1) beam (or beam pair) in real measurement. If the optimal beam (or beam pair) is included, it is considered that a current time of beam (or beam pair) inference is accurate; otherwise, it is considered that the current time of beam (or beam pair) inference is inaccurate. Therefore, a key performance indicator (Key Performance Indicator, KPI) of beam prediction accuracy (BPA) may be obtained through statistics. However, a most significant disadvantage of the above method is a high measurement overhead of the set A, which deviates from an original intention of reducing beam measurement overheads through beam (or beam pair) prediction.

Based on the foregoing problems, this application proposes a spatial filter prediction solution. A first communications device monitors prediction performance of a first network model based on a measurement result corresponding to a first monitoring signal set or a degree of confidence corresponding to a predicted spatial filter in a first prediction data set, thereby reducing or preventing measurement overheads for model performance monitoring, and thus improving model monitoring efficiency.

It should be noted that "beam (or beam pair)" literally means "beam" or "beam pair". Specifically, in embodiments of this application, a beam may refer to a transmit beam or a receive beam, and a beam pair refers to a pair of a transmit beam and a receive beam. In addition, a spatial filter may be used to replace a beam (or beam pair). An output of an AI or ML model may be understood as inference (inference) or prediction (prediction). In this application, inference and prediction represent a same meaning, and may be used interchangeably.

To facilitate understanding of the technical solutions in embodiments of this application, the following describes the technical solutions in this application in detail by using specific embodiments. The following related technologies, as optional solutions, may be randomly combined with the technical solutions of embodiments of this application, all of which fall within the protection scope of embodiments of this application. Embodiments of this application include at least a part of the following content.

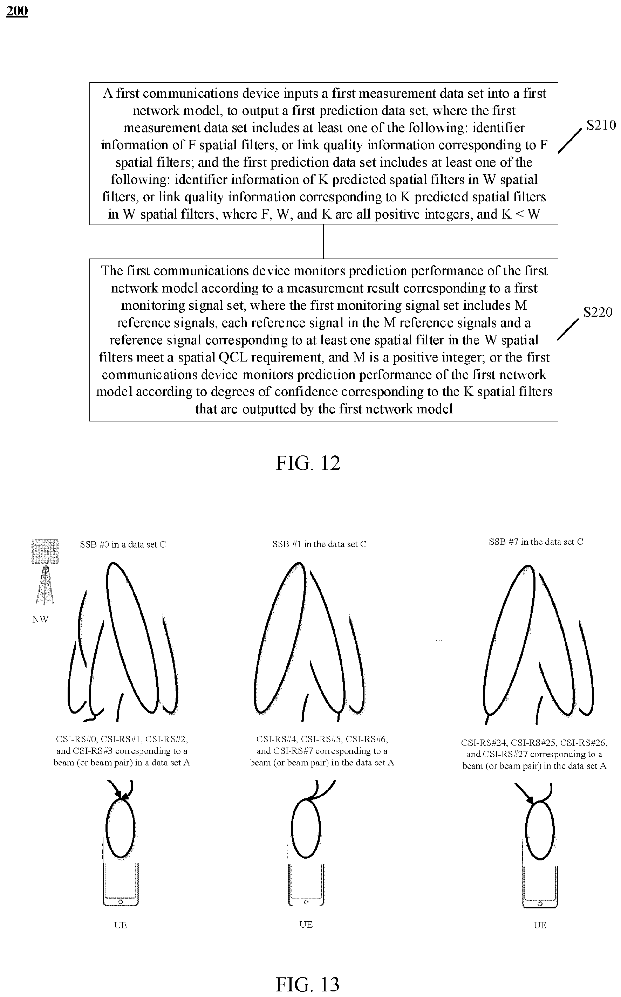

FIG. 12 is a schematic flowchart of a wireless communication method 200 according to an embodiment of this application. As shown in FIG. 12, the wireless communication method 200 may include at least a part of S210 and S220.

In S210, a first communications device inputs a first measurement data set into a first network model, to output a first prediction data set. The first measurement data set includes at least one of the following: identifier information of F spatial filters, or link quality information corresponding to F spatial filters; and the first prediction data set includes at least one of the following: identifier information of K predicted spatial filters in W spatial filters, or link quality information corresponding to K predicted spatial filters in W spatial filters, where F, W, and K are all positive integers, and K < W.

In S220, the first communications device monitors prediction performance of the first network model according to a measurement result corresponding to a first monitoring signal set, where the first monitoring signal set includes M reference signals, each reference signal in the M reference signals and a reference signal corresponding to at least one spatial filter in the W spatial filters meet a spatial QCL requirement, and M is a positive integer; or the first communications device monitors prediction performance of the first network model according to degrees of confidence corresponding to the K spatial filters that are outputted by the first network model.

In embodiments of this application, the first communications device can monitor prediction performance of the first network model based on a measurement result corresponding to the first monitoring signal set or the degree of confidence corresponding to the predicted spatial filter in the first prediction data set, thereby reducing or preventing measurement overheads for model performance monitoring, and thus improving model monitoring efficiency.

In embodiments of this application, the first network model is an AI or ML model. Optionally, the first network model may be an AI or ML model used for beam prediction in spatial domain. Specific implementation of the first network model may be shown in FIG. 9 or FIG. 10. Alternatively, the first network model may be an AI or ML model used for beam prediction in time domain. Specific implementation of the first network model may be shown in FIG. 11.

In some embodiments of this application, a spatial filter (spatial filter) may also be referred to as a beam (beam), a beam pair (beam pair), a spatial relation (Spatial relation), a spatial setting (spatial setting), a spatial domain filter (spatial domain filter), or a reference signal.

In some embodiments, the spatial filter includes one transmit spatial filter. Optionally, the transmit spatial filter may also be referred to as a transmit beam (Tx beam) or a transmit end spatial domain filter, and these terms may be replaced with each other.

In some embodiments, the spatial filter includes one receive spatial filter. Optionally, the receive spatial filter may also be referred to as a transmit beam (Rx beam) or a receive end spatial domain filter, and these terms may be replaced with each other.

In some embodiments, the spatial filter includes one transmit spatial filter and one receive spatial filter. Optionally, a combination of a transmit spatial filter and a receive spatial filter may also be referred to as a beam pair, a spatial filter pair, or a spatial filter group, and these terms may be replaced with each other.

In some embodiments, identifier information of a spatial filter may be an index or identifier of the spatial filter.

For example, identifier information of a transmit spatial filter may be an index or identifier of the transmit spatial filter.

For another example, identifier information of a receive spatial filter may be an index or identifier of the receive spatial filter.

For still another example, identifier information of a combination of a transmit spatial filter and a receive spatial filter may be an index of the combination.

In this embodiment of this application, the first prediction data set may be represented by a set A, the first measurement data set may be represented by a set B, and a first monitoring data set may be represented by a set C. The set B is a subset of the set A, or the set B and the set A are two different beam sets. For example, the set B may be understood as a partial subset of a beam (or beam pair), and the set A may be understood as a universal set of a beam (or beam pair).

Specifically, for example, the first communications device predicts K optimal beams (or beam pairs) in the set A by measuring the set B. For prediction of a transmit beam, the model outputs top K transmit beams. For prediction of a transmit beam-receive beam (Tx-Rx) beam pair, top K beam pairs outputted by the model include top K transmit beams and top K receive beams.

In some embodiments, the link quality information may include but is not limited to at least one of the following:
layer 1 reference signal received power (Layer1 Reference Signal Receiving Power, L1-RSRP), layer 1 reference signal received quality (Reference Signal Receiving Quality, L1-RSRQ), or a layer 1 signal to interference plus noise ratio (Layer1 Signal to Interference plus Noise Ratio, L1-SINR).

In some embodiments, the first communications device is a terminal device, or the first communications device is a network device.

That is, in embodiments of this application, the first network model may be deployed on a terminal device, and the terminal device is configured to monitor the prediction performance of the first network model. Alternatively, the first network model may be deployed on a network device, and the network device is configured to monitor the prediction performance of the first network model.

In some embodiments, in S220, the process of monitoring, by the first communications device, the prediction performance of the first network model according to the measurement result corresponding to the first monitoring signal set includes:
in a case in which a spatial filter in the K spatial filters and a first spatial filter meet a quasi-co-located (Quasi-co-located, QCL) requirement, determining, by the first communications device, that a prediction result of the first network model is accurate; and/or
in a case in which no spatial filter in the K spatial filters and a first spatial filter meet a QCL requirement, determining, by the first communications device, that a prediction result of the first network model is inaccurate,
where the first spatial filter is an optimal spatial filter included in the measurement result corresponding to the first monitoring signal set, or the first spatial filter is an optimal spatial filter determined based on the measurement result corresponding to the monitoring signal set.

In some embodiments, the measurement result corresponding to the first monitoring signal set includes at least one of the following: identifier information of a spatial filter corresponding to the M reference signals, or link quality information corresponding to the M reference signals. In this case, the first spatial filter is an optimal spatial filter determined based on the measurement result corresponding to the first monitoring signal set.

In some embodiments, the measurement result corresponding to the first monitoring signal set includes identifier information of an optimal spatial filter. In this case, the first spatial filter is an optimal spatial filter included in the measurement result corresponding to the first monitoring signal set.

In some embodiments, the measurement result corresponding to the first monitoring signal set is obtained by the first communications device through measurement, or the measurement result corresponding to the first monitoring signal set is obtained by the first communications device from another device.

Specifically, for example, the first communications device is a terminal device. The terminal device executes measurement for the first monitoring signal set, to obtain the measurement result corresponding to the first monitoring signal set. Alternatively, a network device executes measurement for the first monitoring signal set, to obtain the measurement result corresponding to the first monitoring signal set, and the terminal device obtains, from the network device, the measurement result corresponding to the first monitoring signal set. Alternatively, another terminal executes measurement for the first monitoring signal set, to obtain the measurement result corresponding to the first monitoring signal set, and the terminal device obtains, from the another terminal, the measurement result corresponding to the first monitoring signal set. Alternatively, a third-party device executes measurement for the first monitoring signal set, to obtain the measurement result corresponding to the first monitoring signal set, and the terminal device obtains, from the third-party device, the measurement result corresponding to the first monitoring signal set.

Specifically, for example, the first communications device is a network device. The network device executes measurement for the first monitoring signal set, to obtain the measurement result corresponding to the first monitoring signal set. Alternatively, a terminal device executes measurement for the first monitoring signal set, to obtain the measurement result corresponding to the first monitoring signal set, and the network device obtains, from the terminal device, the measurement result corresponding to the first monitoring signal set. Alternatively, a third-party device executes measurement for the first monitoring signal set, to obtain the measurement result corresponding to the first monitoring signal set, and the network device obtains, from the third-party device, the measurement result corresponding to the first monitoring signal set.

In some embodiments, a reference signal in the M reference signals is a downlink reference signal.

In some embodiments, the M reference signals include at least one of the following reference signals: a synchronization signal block (Synchronization Signal Block, SSB), or a channel state information reference signal (Channel State Information Reference Signal, CSI-RS).

Certainly, a reference signal in the M reference signals may also be another type of reference signal. This is not limited in embodiments of this application.

In some embodiments, a spatial filter (that is, a beam) included in the first measurement data set or the first prediction data set may be a narrow beam in terms of beamforming implementation, and a spatial filter (that is, a beam) corresponding to a downlink reference signal in the first monitoring data set may be a wide beam in terms of beamforming implementation. That is, each reference signal in the M reference signals and a reference signal corresponding to at least one spatial filter in the W spatial filters meet a spatial QCL requirement.

Specifically, for example, if transmit beams included in the first prediction data set (set A) are 32 CSI-RS-based narrow beams, the first monitoring data set (set C) may include eight SSB-based wide beams, and each SSB-based wide beam corresponds to four CSI-RS-based narrow beams. A spatial relationship between the narrow beams and the wide beams is shown in FIG. 13. In this way, a spatial quasi-co-located relationship, that is, a QCL type D relationship, is formed between model monitoring reference signals (Reference Signal, RS) (any SSB) in the first monitoring data set (set C) and reference signals (a plurality of CSI-RSs) corresponding to beams in the first prediction data set (set A). A UE may understand that an SSB and a CSI-RS approximately come from a same transmit direction in space, and a same receive beam may be used for receiving the SSB and the CSI-RS. For example, as shown in FIG. 13, for four CSI-RS-based narrow beams in the first prediction data set (set A), a network device may configure and/or activate a transmission configuration indicator (Transmission Configuration Indicator, TCI) state for the four CSI-RS-based narrow beams, where the TCI state includes one SSB-based wide beam that has a QCL type D relationship with the four CSI-RS-based narrow beams. Then, if top K Tx beams inferred by the first network model from the set A has a QCL relationship with an optimal Tx beam in the set C, it may indicate that a current time of model prediction is accurate. Otherwise, it is considered that the current time of model prediction is inaccurate.

In some embodiments, if a quantity of times that the prediction result of the first network model is inaccurate is greater than or equal to a first threshold within a first time window or first duration, the first communications device determines that a model failure of a first type occurs for the first network model.

That is, within the first time window or the first duration, whether the prediction result of the first network model is accurate is determined for a plurality of times, and a quantity of times that the prediction result of the first network model is inaccurate is accumulated, to determine whether a model failure of a first type occurs for the first network model.

Specifically, after the first communications device determines that a model failure of a first type occurs for the first network model, the first communications device or another device may be triggered to perform, based on an LCM mechanism, an operation such as replacement, activation, deactivation, or updating of the model, so that beam prediction performance of the model meets a basic requirement of beam management.

Optionally, the first time window may be specified by a protocol, or the first time window may be configured or indicated by a network device. Optionally, the first time window may correspond to one or more time units, where the time unit may include but is not limited to one of the following: a slot, a mini slot, a frame, a subframe, a symbol, a millisecond, or a microsecond.

Optionally, the first duration may be specified by a protocol, or the first duration may be configured or indicated by a network device. Optionally, the first duration may correspond to one or more time units, where the time unit may include but is not limited to one of the following: a slot, a mini slot, a frame, a subframe, a symbol, a millisecond, or a microsecond.

Optionally, the first threshold is specified by a protocol, or the first threshold is configured or indicated by a network device.

In some embodiments, if prediction accuracy of the first network model is less than a second threshold within a second time window or second duration, the first communications device determines that a model failure of a second type occurs for the first network model.

That is, within the second time window or the second duration, whether the prediction result of the first network model is accurate is determined for a plurality of times, and the prediction accuracy of the first network model is calculated, to determine whether a model failure of a second type occurs for the first network model.

Specifically, after the first communications device determines that a model failure of a second type occurs for the first network model, the first communications device or another device may be triggered to perform, based on an LCM mechanism, an operation such as replacement, activation, deactivation, or updating of the model, so that beam prediction performance of the model meets a basic requirement of beam management.

Optionally, the second time window may be specified by a protocol, or the second time window may be configured or indicated by a network device. Optionally, the second time window may correspond to one or more time units, where the time unit may include but is not limited to one of the following: a slot, a mini slot, a frame, a subframe, a symbol, a millisecond, or a microsecond.

Optionally, the second duration may be specified by a protocol, or the second duration may be configured or indicated by a network device. Optionally, the second duration may correspond to one or more time units, where the time unit may include but is not limited to one of the following: a slot, a mini slot, a frame, a subframe, a symbol, a millisecond, or a microsecond.

Optionally, the second threshold is specified by a protocol, or the second threshold is configured or indicated by a network device.

Therefore, in this embodiment, model monitoring is performed based on the first monitoring data set, thereby reducing measurement overheads for model performance monitoring, and thus improving model monitoring efficiency.

In some embodiments, in S220, the process of monitoring, by the first communications device, the prediction performance of the first network model according to the degrees of confidence corresponding to the K spatial filters that are outputted by the first network model includes:
in a case in which a highest degree of confidence in the degrees of confidence corresponding to the K spatial filters is greater than or equal to a third threshold, determining, by the first communications device, that a prediction result of the first network model is accurate; and/or
in a case in which a highest degree of confidence in the degrees of confidence corresponding to the K spatial filters is less than a third threshold, determining, by the first communications device, that a prediction result of the first network model is inaccurate.

Optionally, the third threshold is specified by a protocol, or the third threshold is configured or indicated by a network device.

In some embodiments, the K spatial filters included in the first prediction data set are spatial filters corresponding to first K degrees of confidence ranked in a descending order of degrees of confidence in a confidence vector that is outputted by the first network model,
where a length of the confidence vector is W, each element vⱼ of the confidence vector indicates that a j^{th} spatial filter in the W spatial filters is a degree of confidence of an optimal spatial filter, 1 ≤ j ≤ W, and vⱼ ∈ (0,1).

It should be noted that a value of vⱼ closer to 1 indicates a higher probability that the j^{th} spatial filter is the optimal spatial filter, and a value of vⱼ closer to 0 indicates a lower probability that the j^{th} spatial filter is the optimal spatial filter.

In some embodiments, an output layer of the first network model is a full connection layer with W neurons. Optionally, the output layer of the first network model uses a Softmax function or another activation function, so that a final output of the first network model is a confidence vector with a length of W.

In some embodiments, if a quantity of times that the highest degree of confidence in the degrees of confidence corresponding to the K spatial filters is less than the third threshold is greater than or equal to a fourth threshold within a third time window or third duration, the first communications device determines that a model failure of a third type occurs for the first network model.

Specifically, after the first communications device determines that a model failure of a third type occurs for the first network model, the first communications device or another device may be triggered to perform, based on an LCM mechanism, an operation such as replacement, activation, deactivation, or updating of the model, so that beam prediction performance of the model meets a basic requirement of beam management.

Optionally, the third time window may be specified by a protocol, or the third time window may be configured or indicated by a network device. Optionally, the third time window may correspond to one or more time units, where the time unit may include but is not limited to one of the following: a slot, a mini slot, a frame, a subframe, a symbol, a millisecond, or a microsecond.

Optionally, the third duration may be specified by a protocol, or the third duration may be configured or indicated by a network device. Optionally, the third duration may correspond to one or more time units, where the time unit may include but is not limited to one of the following: a slot, a mini slot, a frame, a subframe, a symbol, a millisecond, or a microsecond.

Optionally, the fourth threshold may be specified by a protocol, or the fourth threshold may be configured or indicated by a network device.

Therefore, in this embodiment, model monitoring is performed based on a degree of confidence, thereby preventing measurement overheads for model performance monitoring, and thus improving model monitoring efficiency.

In some embodiments, the first communications device determines to switch from the first network model to a second network model that has a same function as that implemented by the first network model.

Specifically, for example, in a case in which the first communications device determines that a model failure of a first type occurs for the first network model, the first communications device determines to switch from the first network model to the second network model that has the same function as that implemented by the first network model.

Specifically, for another example, in a case in which the first communications device determines that a model failure of a second type occurs for the first network model, the first communications device determines to switch from the first network model to the second network model that has the same function as that implemented by the first network model.

Specifically, for still another example, in a case in which the first communications device determines that a model failure of a third type occurs for the first network model, the first communications device determines to switch from the first network model to the second network model that has the same function as that implemented by the first network model.

In some embodiments, the first communications device transmits first information,
where the first information includes at least one of the following: a model identifier of the first network model, a model failure type corresponding to the first network model, or a model identifier of the second network model.

It should be noted that the model failure type corresponding to the first network model may indicate a reason for a model failure event. For example, a quantity of times that prediction of the first network model is inaccurate is excessively large, or prediction accuracy of the first network model is excessively low, or a degree of confidence outputted by the first network model is excessively low.

In some embodiments, the first information is used to request at least one of the following:
configuring and/or activating a spatial filter prediction range of a prediction data set corresponding to the second network model; or
configuring and/or activating a measurement resource of a measurement data set corresponding to the second network model.

Optionally, a network device may configure and/or activate, in response to a request of a terminal device, at least one of the following:
configuring and/or activating a spatial filter prediction range of a prediction data set corresponding to the second network model; or
configuring and/or activating a measurement resource of a measurement data set corresponding to the second network model.

In some embodiments, in a case in which the first communications device monitors the prediction performance of the first network model according to the measurement result corresponding to the first monitoring signal set, the first information is further used to request to configure and/or activate a model monitoring resource of a monitoring signal set corresponding to the second network model.

Optionally, a network device may configure and/or activate, in response to a request of a terminal device, the model monitoring resource of the monitoring signal set corresponding to the second network model.

In some embodiments, the first information may be carried by medium access control control element (Media Access Control Control Element, MAC CE) signalling, or may be carried by another signalling. This is not limited in embodiments of this application.

In this embodiment, the first communications device is a terminal device. For example, the terminal device transmits the first information to a network device, to request a spatial filter measurement resource adapted to the second network model.

In some embodiments, the first communications device transmits second information, where the second information is used to request to replace the first network model with a network model that has a same function as that implemented by the first network model.

Specifically, for example, the terminal device transmits second information to the network device, to request to replace the first network model with a network model that has a same function as that implemented by the first network model.

In some embodiments, the second information includes at least one of the following: a model identifier of the first network model, or a model failure type corresponding to the first network model.

It should be noted that the model failure type corresponding to the first network model may indicate a reason for a model failure event. For example, a quantity of times that prediction of the first network model is inaccurate is excessively large, or prediction accuracy of the first network model is excessively low, or a degree of confidence outputted by the first network model is excessively low.

Specifically, for example, in a case in which the first communications device determines that a model failure of a first type occurs for the first network model, the first communications device transmits the second information, to request to replace the first network model with a network model that has a same function as that implemented by the first network model.

Specifically, for another example, in a case in which the first communications device determines that a model failure of a second type occurs for the first network model, the first communications device transmits the second information, to request to replace the first network model with a network model that has a same function as that implemented by the first network model.

Specifically, for still another example, in a case in which the first communications device determines that a model failure of a third type occurs for the first network model, the first communications device transmits the second information, to request to replace the first network model with a network model that has a same function as that implemented by the first network model.

In some embodiments, the second information may be carried by MAC CE signalling, or may be carried by another signalling. This is not limited in embodiments of this application.

In some embodiments, the first communications device receives third information, where the third information is used to instruct to deactivate the first network model and activate a third network model that has a same function as that implemented by the first network model.

It should be noted that the third information is determined based on the second information, or the third information is a response to the second information.

Specifically, for example, after receiving the second information, a network device learns that a terminal device requests to replace the first network model with a network model that has a same function as that implemented by the first network model. Then, the network device transmits the third information to the terminal device, to instruct the terminal device to deactivate the first network model and activate the third network model that has the same function as that implemented by the first network model.

In some embodiments, the third information is used to configure and/or activate at least one of the following:
a spatial filter prediction range of a prediction data set corresponding to the third network model; or
a measurement resource of a measurement data set corresponding to the third network model.

In some embodiments, in a case in which the first communications device monitors the prediction performance of the first network model according to the measurement result corresponding to the first monitoring signal set, the third information is further used to configure and/or activate a model monitoring resource of a monitoring signal set corresponding to the third network model.

In some embodiments, the third information may be carried by MAC CE signalling or downlink control information (Downlink Control Information, DCI), or may be carried by another signalling. This is not limited in embodiments of this application.

In some embodiments, the first communications device transmits fourth information, where the fourth information is used to request to update a model parameter of the first network model. For example, a terminal device transmits fourth information to a network device, to request to update the model parameter of the first network model.

Specifically, for example, in a case in which the first communications device determines that a model failure of a first type occurs for the first network model, the first communications device transmits the fourth information, to request to update the model parameter of the first network model.

Specifically, for another example, in a case in which the first communications device determines that a model failure of a second type occurs for the first network model, the first communications device transmits the fourth information, to request to update the model parameter of the first network model.

Specifically, for still another example, in a case in which the first communications device determines that a model failure of a third type occurs for the first network model, the first communications device transmits the fourth information, to request to update the model parameter of the first network model.

In some embodiments, the first communications device receives fifth information, where the fifth information is used to configure and/or activate at least one of the following:
updating a measurement resource of a prediction data set required by the first network model; or
updating a measurement resource of a measurement data set required by the first network model.

Specifically, for example, after receiving the fourth information, a network device learns that a terminal device requests to update the model parameter of the first network model. Then, the network device transmits the fifth information to the terminal device, to update the measurement resource of the prediction data set required by the first network model and/or update the measurement resource of the measurement data set required by the first network model.

That is, in this embodiment, a terminal device requests a network device to update a parameter of an old model, that is, perform fine tuning (fine-tuning) on the model through further model training, to enhance beam (or beam pair) prediction performance of the model.

In some embodiments, the first communications device implements, through a non-network model, a function implemented by the first network model. Specifically, for example, the first communications device falls back to a conventional beam management mechanism that is not based on AI or ML.

Optionally, the first communications device may be a terminal device, or may be a network device.

Specifically, for example, in a case in which the first communications device determines that a model failure of a first type occurs for the first network model, the first communications device implements, through a non-network model, the function implemented by the first network model.

Specifically, for another example, in a case in which the first communications device determines that a model failure of a second type occurs for the first network model, the first communications device implements, through a non-network model, the function implemented by the first network model.

Specifically, for still another example, in a case in which the first communications device determines that a model failure of a third type occurs for the first network model, the first communications device implements, through a non-network model, the function implemented by the first network model.

In some embodiments, the first communications device releases a measurement resource of the first measurement data set.

In some embodiments, in a case in which the first communications device monitors the prediction performance of the first network model according to the measurement result corresponding to the first monitoring signal set, the first communications device releases a monitoring resource of the first monitoring data set.

In some embodiments, the first communications device transmits model monitoring information, where the model monitoring information includes a model identifier of the first network model and a model failure type corresponding to the first network model.

Specifically, for example, in a case in which the first communications device determines that a model failure of a first type occurs for the first network model, the first communications device transmits the model monitoring information.

Specifically, for another example, in a case in which the first communications device determines that a model failure of a second type occurs for the first network model, the first communications device transmits the model monitoring information.

Specifically, for still another example, in a case in which the first communications device determines that a model failure of a third type occurs for the first network model, the first communications device transmits the model monitoring information.

It should be noted that the model failure type corresponding to the first network model may indicate a reason for a model failure event. For example, a quantity of times that prediction of the first network model is inaccurate is excessively large, or prediction accuracy of the first network model is excessively low, or a degree of confidence outputted by the first network model is excessively low.

In some embodiments, in a case in which the first communications device monitors the prediction performance of the first network model according to the measurement result corresponding to the first monitoring signal set, the model monitoring information further includes the prediction accuracy of the first network model.

Specifically, for example, when the prediction accuracy of the first network model within the second duration or the second time window is excessively low, a terminal device reports the prediction accuracy to a network device, where a value of the prediction accuracy ranges from 0 to 1.

In some embodiments, in a case in which the first communications device monitors the prediction performance of the first network model according to the degrees of confidence corresponding to the K spatial filters, the model monitoring information further includes an average value of a maximum value in the degrees of confidence corresponding to the K spatial filters within fourth duration. Optionally, the fourth duration may be specified by a protocol, or the fourth duration may be configured or indicated by a network device.

Specifically, for example, when degrees of confidence outputted by the first network model are excessively low, a terminal device reports an average value of a maximum value in the degrees of confidence outputted by the first network model within the fourth duration, and the average value ranges from 0 to 1.

In some embodiments, the prediction accuracy of the first network model included in the model monitoring information is represented by a plurality of quantization intervals. For example, four quantization intervals are used. The quantization intervals are respectively 0-0.25, 0.25-0.5, 0.5-0.75, and 0.75-1, which may be quantized into one field of two bits each, and respectively correspond to 00, 01, 10, and 11. That is, 00 indicates that the prediction accuracy is in the range of 0-0.25, 01 indicates that the prediction accuracy is in the range of 0.25-0.5, 10 indicates that the prediction accuracy is in the range of 0.5-0.75, and 11 indicates that the prediction accuracy is in the range of 0.75-1.

In some embodiments, the average value of the maximum value in the degrees of confidence corresponding to the K spatial filters included in the model monitoring information within the fourth duration is represented by a plurality of quantization intervals. For example, four quantization intervals are used. The quantization intervals are respectively 0-0.25, 0.25-0.5, 0.5-0.75, and 0.75-1, which may be quantized into one field of two bits each, and respectively correspond to 00, 01, 10, and 11. That is, 00 indicates that the average value is in the range of 0-0.25, 01 indicates that the average value is in the range of 0.25-0.5, 10 indicates that the average value is in the range of 0.5-0.75, and 11 indicates that the average value is in the range of 0.75-1.

In some embodiments, the first communications device receives sixth information,
where the sixth information is used to instruct the first communications device to deactivate the first network model and activate a fourth network model that has a same function as that implemented by the first network model.

Specifically, for example, a network device receives model monitoring information transmitted by a terminal device, and then the network device transmits sixth information to the terminal device, to instruct the terminal device to deactivate the first network model and activate the fourth network model that has the same function as that implemented by the first network model.

In some embodiments, the sixth information is used to configure and/or activate at least one of the following:
a spatial filter prediction range of a prediction data set corresponding to the fourth network model; or
a measurement resource of a measurement data set corresponding to the fourth network model.

In some embodiments, in a case in which the first communications device monitors the prediction performance of the first network model according to the measurement result corresponding to the first monitoring signal set, the sixth information is further used to configure and/or activate a model monitoring resource of a monitoring signal set corresponding to the fourth network model.

In some embodiments, the first communications device receives seventh information,
where the seventh information is used to indicate a resource for updating a model parameter of the first network model.

Specifically, for example, a network device receives model monitoring information transmitted by a terminal device, and then the network device transmits seventh information to the terminal device, to indicate the resource for updating the model parameter of the first network model.

In some embodiments, the seventh information is used to configure and/or activate at least one of the following:
updating a measurement resource of a prediction data set required by the first network model; or
updating a measurement resource of a measurement data set required by the first network model.

In some embodiments, the first communications device receives eighth information, where the eighth information is used to instruct the first communications device to implement, through a non-network model, a function implemented by the first network model. Specifically, for example, the eighth information is used to instruct the first communications device to fall back to a conventional beam management mechanism that is not based on AI or ML.

Specifically, for example, a network device receives model monitoring information transmitted by a terminal device, and then the network device transmits eighth information to the terminal device, to instruct the terminal device to implement, through a non-network model, the function implemented by the first network model.

In some embodiments, the eighth information is further used to instruct the first communications device to release a measurement resource of the first measurement data set.

In some embodiments, in a case in which the first communications device monitors the prediction performance of the first network model according to the measurement result corresponding to the first monitoring signal set, the eighth information is further used to instruct the first communications device to release a monitoring resource of the first monitoring data set.

In some embodiments, the first communications device deactivates the first network model, and activates a fifth network model that has a same function as that implemented by the first network model. Optionally, the first communications device is a network device. For example, the network device deactivates the first network model and activates the fifth network model that has the same function as that implemented by the first network model.

Specifically, for example, in a case in which the first communications device determines that a model failure of a first type occurs for the first network model, the first communications device deactivates the first network model and activates the fifth network model that has the same function as that implemented by the first network model.

Specifically, for another example, in a case in which the first communications device determines that a model failure of a second type occurs for the first network model, the first communications device deactivates the first network model and activates the fifth network model that has the same function as that implemented by the first network model.

Specifically, for still another example, in a case in which the first communications device determines that a model failure of a third type occurs for the first network model, the first communications device deactivates the first network model and activates the fifth network model that has the same function as that implemented by the first network model.

In some embodiments, the first communications device configures and/or activates at least one of the following:
a spatial filter prediction range of a prediction data set corresponding to the fifth network model; or
a measurement resource of a measurement data set corresponding to the fifth network model.

In some embodiments, in a case in which the first communications device monitors the prediction performance of the first network model according to the measurement result corresponding to the first monitoring signal set, the first communications device configures and/or activates a model monitoring resource of a monitoring signal set corresponding to the fifth network model.

In some embodiments, the first communications device determines a resource for updating a model parameter of the first network model.

In some embodiments, the first communications device updates at least one of the following:
a measurement resource of a prediction data set required by the first network model; or
a measurement resource of a measurement data set required by the first network model.

Therefore, in embodiments of this application, the first communications device can monitor prediction performance of the first network model based on the measurement result corresponding to the first monitoring signal set or the degree of confidence corresponding to the predicted spatial filter in the first prediction data set, thereby reducing or preventing measurement overheads for model performance monitoring, and thus improving model monitoring efficiency.

The following describes the technical solutions of this application in detail by using Embodiment 1 to Embodiment 3.

It should be noted that, in Embodiment 1 to Embodiment 3, a first prediction data set may be represented by a data set A (set A), a first measurement data set may be represented by a data set B (set B), and a first monitoring data set may be represented by a data set C (set C). The set B is a subset of the set A, or the set B and the set A are two different beam sets. For example, the set B may be understood as a partial subset of a beam (or beam pair), and the set A may be understood as a universal set of a beam (or beam pair). A model is the foregoing first network model.

In Embodiment 1, a model is deployed on a UE side, the UE side monitors prediction performance of the model, and the UE side executes an LCM decision.

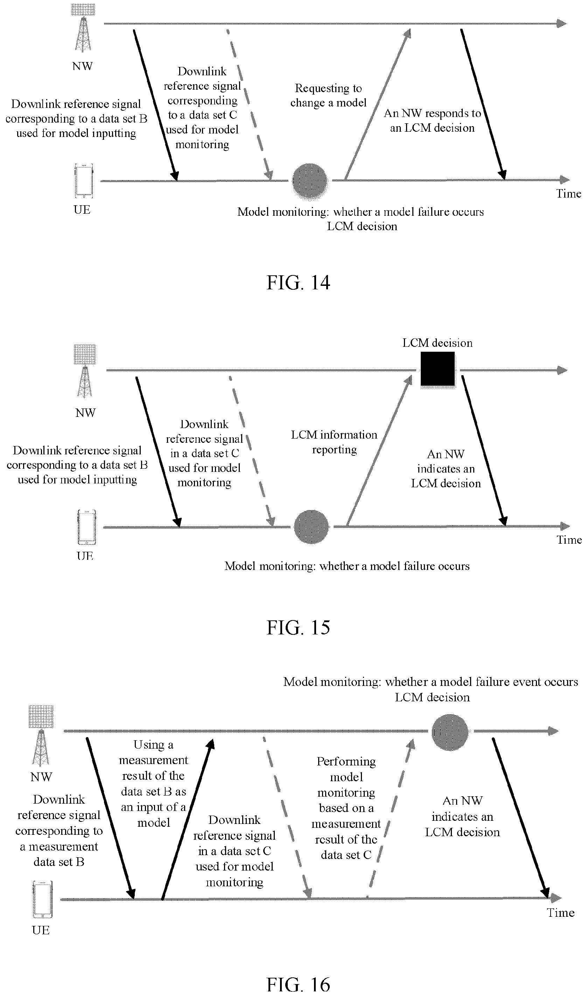

As shown in FIG. 14, this embodiment is based on a beam (or beam pair) inference model on the UE side and the UE monitors beam (or beam pair) prediction performance of the model. When the beam (or beam pair) prediction performance of the model is poor, the UE performs a responsive model LCM operation.

Specifically, for example, the model is deployed on the UE side, the UE performs beam (or beam pair) prediction based on the model, and the UE predicts K optimal beams (or beam pairs) in a set A by measuring a set B. For prediction of a Tx beam, the model outputs top K transmit beams. For prediction of a Tx-Rx beam pair, top K beam pairs outputted by the model further include top K transmit beams.

In Embodiment 1, the terminal device may monitor the prediction performance of the model based on a set C.

The set C may include a group of downlink reference signals, such as an SSB and/or a CSI-RS. Unlike a configuration that only a narrow beam is included in the set A and the set B, a downlink reference signal in the set C may be a wide beam in terms of beamforming implementation.

For example, if transmit beams included in the set A are 32 CSI-RS-based narrow beams, the set C may include eight SSB-based wide beams, and each SSB-based wide beam corresponds to four CSI-RS-based narrow beams. A spatial relationship between the narrow beams and the wide beams is shown in FIG. 13. In this way, a spatial quasi-co-located relationship, that is, a QCL type D relationship, is formed between reference signals (any SSB) in the set C and reference signals (a plurality of corresponding CSI-RS) corresponding to a plurality of beams (or beam pairs) in the set A. The UE may understand that the reference signals (any SSB) in the set C and the reference signals corresponding to a plurality of beams (or beam pairs) in the set A approximately come from a same spatial transmit direction in space, and a same receive beam may be used for receiving the reference signals.

To monitor performance of the model, the UE measures the set C, which may significantly reduce overheads of measurement based on the set A. For example, an NW may configure and/or activate a TCI state for the plurality of CSI-RS-based narrow beams in the Set A, where the TCI state includes one SSB-based wide beam that has a QCL type D (QCL-TypeD) relationship with the plurality of CSI-RS-based narrow beams. Then, if top K Tx beams inferred by the model from the set A has a QCL relationship with an optimal Tx beam in the set C, it may indicate that a current time of model prediction is accurate. Otherwise, it is considered that the current time of model prediction is inaccurate.

Specifically, when none of top K beams (or beam pairs) predicted by the terminal device based on the model is quasi-co-located with an optimal (Top-1) beam (or beam pair) obtained through measurement based on the set C, it may be understood that a result of a current time of beam (or beam pair) prediction is inaccurate. Otherwise, it is considered that the result of the current time of beam (or beam pair) prediction is accurate.

Within a specific time window, a plurality of measurement results of the set C are compared with an inference result of the set A. When a quantity of times that beam measurement is inaccurate is accumulated to a specific quantity N_{MFE}, the terminal device understands that a model failure event (Model Failure Event, MFE) occurs. For example, the terminal device may determine that a model failure of a first type occurs for the model.

Beam prediction accuracy (BAP) may be obtained through a plurality of times of measurement performed by the terminal device. If the BAP is less than a threshold BAPₜₕ within a specific measurement time window, the terminal device may determine that a model failure of a second type occurs for the model.

In Embodiment 1, the terminal device may monitor the prediction performance of the model based on a degree of confidence.

A specific structure of the model may be a DNN or another neural network architecture, which is not specifically limited in this specification. An output layer of the model is a full connection layer including W neurons (a quantity of neurons should be the same as a quantity of beams (or beam pairs) included in the set A), and uses a Softmax function or another activation function. Therefore, a final output of the model is a confidence vector with a length of W, and is denoted as v. Each element vⱼ of the confidence vector v meets vⱼ ∈ (0,1), and 1 ≤ j ≤ W, indicating a degree of confidence that a j^{th} beam (or beam pair) in the set A is an optimal beam pair. A value of vⱼ closer to 1 indicates a higher probability that the j^{th} beam (or beam pair) is the optimal beam pair, and a value of vⱼ closer to 0 indicates a lower probability that the j^{th} beam (or beam pair) is the optimal beam pair.

The model may select indexes of K beams (or beam pairs) with a highest degree of confidence from the confidence vector v as a final prediction result of the model. When K = 1, an index of an optimal beam (or beam pair) is outputted; when K > 1, indexes of a plurality of optimal beams (or beam pairs) are outputted.

When a highest degree of confidence v_{Top1} of the top K beams (or beam pairs) outputted by the model is less than a predefined threshold vₜₕ, it may be understood that the model may not accurately predict the optimal beam. When a quantity of times that a degree of confidence of model prediction is less than a specific threshold is greater than a specific quantity of times C_{MFE} within a specific time window, the terminal device may determine that a model failure of a third type occurs for the model.

One most evident benefit of model monitoring based on a degree of confidence is that additional measurement of the set A or the set C is not required. Therefore, measurement overheads of model monitoring are not generated.

After a model failure occurs for the model, the terminal device may determine a subsequent LCM operation, and transmit, to a network device, a request related to a model change, as shown in FIG. 14.

In Embodiment 1, the UE side determines LCM, and the NW side cooperates with the UE side in executing LCM.

After a model failure event occurs, as an LCM entity responsible for model monitoring, the UE is necessary to make a decision on LCM management of the model. A specific operation may be one of the following options 1 to 4.

### Option 1

The UE determines to replace the model with a new model for beam (or beam pair) prediction and requests, from the NW, a beam (or beam pair) measurement resource adapted to the new model. A MAC CE is used to carry signalling, including a model identifier of the old model, a model failure type, and a model identifier of the new model.

The UE deactivates the old model on which the model failure event occurs and activates the new model.

The UE requests, from the NW, a downlink measurement resource adapted to the new model, which includes at least one of the following:
configuring and/or activating a beam (or beam pair) prediction range of a set A of the new model;
configuring and/or activating a measurement resource of a set B of the new model; or
configuring and/or activating a model monitoring resource of a set C of the new model.

### Option 2

The UE requests the NW to replace the model with a new model for beam (or beam pair) prediction. If the NW agrees, the NW responds to this LCM operation request of the UE.

For example, the UE reports the old model on which the model failure event occurs. A MAC CE is used to carry signalling, including a model identifier of the old model, and a model failure type.

For example, the NW deactivates the old model on which the model failure event occurs and activates the new model.

### Option 3

The UE requests the NW to update a parameter of the old model, that is, perform fine tuning (fine-tuning) on the model through further model training, to enhance beam (or beam pair) prediction performance of the model.

The UE requesting, from the NW, a resource required for fine tuning includes:
configuring and/or activating a measurement resource of a set A for updating the model as a universal set for beam (or beam pair) prediction, where the UE may find information about an optimal beam (or beam pair) as a label (label) of the set A by measuring the set A; and
configuring and/or activating a measurement resource of a set B for updating the model as a subset for beam (or beam pair) measurement.

### Option 4

The UE falls back to a conventional beam management mechanism that is not based on AI or ML.

The UE requests the NW to release a measurement resource of a set B and a model monitoring resource of the set C.

The UE completes conventional beam reporting through conventional beam (or beam pair) measurement.

In Embodiment 2, a model is deployed on a UE side, the UE side monitors prediction performance of the model, and an NW side executes an LCM decision.

As shown in FIG. 15, this embodiment is based on a beam (or beam pair) inference model on the UE side and the UE monitors beam (or beam pair) prediction performance of the model. When the beam (or beam pair) prediction performance of the model is poor, the UE reports a model failure event (MFE) to the NW, and the NW makes a decision on model LCM.

Specifically, for example, the model is deployed on the UE side, the UE performs beam (or beam pair) prediction based on the model, and the UE predicts K optimal beams (or beam pairs) in a set A by measuring a set B. For prediction of a Tx beam, the model outputs top K transmit beams. For prediction of a Tx-Rx beam pair, top K beam pairs outputted by the model further include top K transmit beams.

In Embodiment 2, the terminal device may monitor the prediction performance of the model based on a set C.

The set C may include a group of downlink reference signals, such as an SSB and/or a CSI-RS. Unlike a configuration that only a narrow beam is included in the set A and the set B, a downlink reference signal in the set C may be a wide beam in terms of beamforming implementation.

For example, if transmit beams included in the set A are 32 CSI-RS-based narrow beams, the set C may include eight SSB-based wide beams, and each SSB-based wide beam corresponds to four CSI-RS-based narrow beams. A spatial relationship between the narrow beams and the wide beams is shown in FIG. 13. In this way, a spatial quasi-co-located relationship, that is, a QCL type D relationship, is formed between reference signals (any SSB) in the set C and reference signals (a plurality of corresponding CSI-RS) corresponding to a plurality of beams (or beam pairs) in the set A. The UE may understand that the reference signals (any SSB) in the set C and the reference signals corresponding to a plurality of beams (or beam pairs) in the set A approximately come from a same spatial transmit direction in space, and a same receive beam may be used for receiving the reference signals.

To monitor performance of the model, the UE measures the set C, which may significantly reduce overheads of measurement based on the set A. For example, an NW may configure and/or activate a TCI state for the plurality of CSI-RS-based narrow beams in the set A, where the TCI state includes one SSB-based wide beam that has a QCL type D (QCL-TypeD) relationship with the plurality of CSI-RS-based narrow beams. Then, if top K Tx beams inferred by the model from the set A has a QCL relationship with an optimal Tx beam in the set C, it may indicate that a current time of model prediction is accurate. Otherwise, it is considered that the current time of model prediction is inaccurate.

Specifically, when none of top K beams (or beam pairs) predicted by the terminal device based on the model is quasi-co-located with an optimal (Top-1) beam (or beam pair) obtained through measurement based on the set C, it may be understood that a result of a current time of beam (or beam pair) prediction is inaccurate. Otherwise, it is considered that the result of the current time of beam (or beam pair) prediction is accurate.

Within a specific time window, a plurality of measurement results of the set C are compared with an inference result of the set A. When a quantity of times that beam measurement is inaccurate is accumulated to a specific quantity N_{MFE}, the terminal device understands that a model failure event (Model Failure Event, MFE) occurs. For example, the terminal device may determine that a model failure of a first type occurs for the model.

Beam prediction accuracy (BAP) may be obtained through a plurality of times of measurement performed by the terminal device. If the BAP is less than a threshold BAPₜₕ within a specific measurement time window, the terminal device may determine that a model failure of a second type occurs for the model.

In Embodiment 2, the terminal device may monitor the prediction performance of the model based on a degree of confidence.

A specific structure of the model may be a DNN or another neural network architecture, which is not specifically limited in this specification. An output layer of the model is a full connection layer including W neurons (a quantity of neurons should be the same as a quantity of beams (or beam pairs) included in the set A), and uses a Softmax function or another activation function. Therefore, a final output of the model is a confidence vector with a length of W, and is denoted as v. Each element vⱼ of the confidence vector v meets vⱼ ∈ (0,1), and 1 ≤ j ≤ W, indicating a degree of confidence that a j^{th} beam (or beam pair) in the set A is an optimal beam pair. A value of vⱼ closer to 1 indicates a higher probability that the j^{th} beam (or beam pair) is the optimal beam pair, and a value of vⱼ closer to 0 indicates a lower probability that the j^{th} beam (or beam pair) is the optimal beam pair.

The model may select indexes of K beams (or beam pairs) with a highest degree of confidence from the confidence vector v as a final prediction result of the model. When K = 1, an index of an optimal beam (or beam pair) is outputted; when K > 1, indexes of a plurality of optimal beams (or beam pairs) are outputted.

When a highest degree of confidence v_{Top1} of the top K beams (or beam pairs) outputted by the model is less than a predefined threshold vₜₕ, it may be understood that the model may not accurately predict the optimal beam. When a quantity of times that a degree of confidence of model prediction is less than a specific threshold is greater than a specific quantity of times C_{MFE} within a specific time window, the terminal device may determine that a model failure of a third type occurs for the model.

One most evident benefit of model monitoring based on a degree of confidence is that additional measurement of the set A or the set C is not required. Therefore, measurement overheads of model monitoring are not generated.

After a model failure occurs for the model, the terminal device reports model monitoring information, and a network device makes a decision on model LCM based on the model monitoring information, as shown in FIG. 15.

Regardless of model monitoring based on measurement or model monitoring based on a degree of confidence, the UE reports the model monitoring information to the NW when a condition for triggering a model failure event (MFE) is met. The model monitoring information includes but is not limited to the following information:
an identity (Identity, ID) of the model known by both the NW and the UE, that is, a model ID (Model ID); and
a model failure type, that is, a model failure of a first type, a model failure of a second type, or a model failure of a third type, which indicates a reason for a model failure event, such as excessively low accuracy of model prediction or an excessively low degree of confidence outputted by the model.

When BAP of the model is excessively low within a period of time, the UE reports the BAP value to the NW, where the value ranges from 0 to 1.

When the degree of confidence outputted by the model is excessively low, the UE reports an average value of a maximum value in degrees of confidence outputted by the model within a period of time, where the average value also ranges from 0 to 1.

The foregoing values ranging from 0 to 1 may be quantized. For example, the values are quantized into four intervals, that is, 0-0.25, 0.25-0.5, 0.5-0.75, and 0.75-1. The intervals may be quantized into one field of 2 bits each, and respectively correspond to 00, 01, 10, and 11.

In Embodiment 2, the NW determines LCM.

After receiving the model monitoring information reported by the UE, the NW makes a decision on LCM. A specific operation may be one of the following options 5 to 7.

### Option 5

The NW deactivates the old model for the UE and activates a new model for beam (or beam pair) prediction. Optionally, a MAC CE is used to carry signalling, including a model ID of the old model and a model ID of the new model.

The NW configures and/or activates a measurement resource adapted to the new model, which includes at least one of the following:
a beam (or beam pair) prediction range of a set A of the new model;
a measurement resource of a set B of the new model; or
a model monitoring resource of a set C of the new model.

### Option 6

The NW updates a parameter of the model for the UE, that is, performs fine tuning (fine-tuning) on the model through further model training, to enhance beam (or beam pair) prediction performance of the model.

The NW indicating, to the UE, a resource required for fine tuning includes:
configuring and/or activating a measurement resource of a set A for updating the model as a universal set for beam (or beam pair) prediction, where the UE may find information about an optimal beam (or beam pair) as a label (label) of the set A by measuring the set A; and
configuring and/or activating a measurement resource of a set B for updating the model as a subset for beam (or beam pair) measurement.

### Option 7

The NW instruct the UE to fall back to a conventional beam management mechanism that is not based on AI or ML.

The UE is instructed to release a measurement resource of the set B (model inputting) and a measurement resource of the set C (model monitoring).

The UE completes conventional beam reporting through conventional beam (or beam pair) measurement.

In Embodiment 3, a model is deployed on an NW side, the NW side monitors prediction performance of the model, and the NW side executes an LCM decision.

As shown in FIG. 16, this embodiment is based on a beam (or beam pair) inference model on the NW side and the NW monitors beam (or beam pair) prediction performance of the model. When the beam (or beam pair) prediction performance of the model is poor, the NW makes a decision on model LCM.

Specifically, for example, the model is deployed on the NW side, and the NW performs beam (or beam pair) prediction based on the model. A UE measures a set B, and reports, to the NW, all measurement results of the set B, including an ID of a Tx beam and corresponding L1-RSRP. The NW performs inference by using the measurement results of the set B that are reported by the UE as an input of the model, and selects top K beams (or beam pairs) from a set A.

In Embodiment 2, a network device may monitor the prediction performance of the model based on a set C.

The set C may include a group of downlink reference signals, such as an SSB and/or a CSI-RS. Unlike a configuration that only a narrow beam is included in the set A and the set B, a downlink reference signal in the set C may be a wide beam in terms of beamforming implementation.

For model monitoring, the UE measures a wide beam in the set C, which may significantly reduce overheads of measurement based on the set A. Because the model is not on the UE side, the UE cannot perform comparison. The UE is necessary to report, to the NW, a measurement result of a reference signal set for model monitoring, that is, the set C, including an ID of a Tx beam and/or corresponding L1-RSRP. Conventional beam reporting may be adopted to report an optimal beam in the set C, or may be simplified to report only an ID of an optimal Tx beam without reporting L1-RSRP of the optimal Tx beam.

For example, if transmit beams included in the set A are 32 CSI-RS-based narrow beams, the set C may include eight SSB-based wide beams, and each SSB-based wide beam corresponds to four CSI-RS-based narrow beams. A spatial relationship between the narrow beams and the wide beams is shown in FIG. 13. In this way, a spatial quasi-co-located relationship, that is, a QCL type D relationship, is formed between reference signals (any SSB) in the set C and reference signals (a plurality of corresponding CSI-RS) corresponding to a plurality of beams (or beam pairs) in the set A. The UE may understand that the reference signals (any SSB) in the set C and the reference signals corresponding to a plurality of beams (or beam pairs) in the set A approximately come from a same spatial transmit direction in space, and a same receive beam may be used for receiving the reference signals.

To monitor performance of the model, the UE measures the set C. For example, an NW may configure and/or activate a TCI state for the plurality of CSI-RS-based narrow beams in the set A, where the TCI state includes one SSB-based wide beam that has a QCL type D (QCL-TypeD) relationship with the plurality of CSI-RS-based narrow beams. Then, if top K Tx beams inferred by the model from the set A has a QCL relationship with an optimal Tx beam in the set C, it may indicate that a current time of model prediction is accurate. Otherwise, it is considered that the current time of model prediction is inaccurate.

Specifically, the NW receives a measurement result of a wide beam in the set C, runs the beam (or beam pair) prediction model, and predicts top K beams (or beam pairs) in the set A. When none of the top K beams (or beam pairs) predicted by the NW based on the model is quasi-co-located with an optimal (Top-1) beam (or beam pair) obtained through measurement based on the set C, it may be understood that a result of a current time of beam (or beam pair) prediction is inaccurate. Otherwise, it is considered that the result of the current time of beam (or beam pair) prediction is accurate.

Within a specific time window, a plurality of measurement results of the set C are compared with an inference result of the set A. When a quantity of times that beam measurement is inaccurate is accumulated to a specific quantity N_{MFE}, the terminal device understands that a model failure event (Model Failure Event, MFE) occurs. For example, the network device may determine that a model failure of a first type occurs for the model.

Beam prediction accuracy (BAP) may be obtained through a plurality of times of measurement performed by the network device. If the BAP is less than a threshold BAPₜₕ within a specific measurement time window, the network device may determine that a model failure of a second type occurs for the model.

In Embodiment 2, the network device may monitor the prediction performance of the model based on a degree of confidence.

A specific structure of the model may be a DNN or another neural network architecture, which is not specifically limited in this specification. An output layer of the model is a full connection layer including W neurons (a quantity of neurons should be the same as a quantity of beams (or beam pairs) included in the set A), and uses a Softmax function or another activation function. Therefore, a final output of the model is a confidence vector with a length of W, and is denoted as v. Each element vⱼ of the confidence vector v meets vⱼ ∈ (0,1), and 1 ≤ j ≤ W, indicating a degree of confidence that a j^{th} beam (or beam pair) in the set A is an optimal beam pair. A value of vⱼ closer to 1 indicates a higher probability that the j^{th} beam (or beam pair) is the optimal beam pair, and a value of vⱼ closer to 0 indicates a lower probability that the j^{th} beam (or beam pair) is the optimal beam pair.

The model may select indexes of K beams (or beam pairs) with a highest degree of confidence from the confidence vector v as a final prediction result of the model. When K = 1, an index of an optimal beam (or beam pair) is outputted; when K > 1, indexes of a plurality of optimal beams (or beam pairs) are outputted.

When a highest degree of confidence v_{Top1} of the top K beams (or beam pairs) outputted by the model is less than a predefined threshold vₜₕ, it may be understood that the model may not accurately predict the optimal beam. When a quantity of times that a degree of confidence of model prediction is less than a specific threshold is greater than a specific quantity of times C_{MFE} within a specific time window, the network device may determine that a model failure of a third type occurs for the model.

One most evident benefit of model monitoring based on a degree of confidence is that additional measurement of the set A or the set C is not required. Therefore, measurement overheads of model monitoring are not generated.

After a model failure occurs for the model, the network device makes a decision on model LCM, as shown in FIG. 16.

In Embodiment 3, the NW determines LCM.

The NW makes a decision on LCM. A specific operation may be one of the following options 8 to 10.

### Option 8

The NW deactivates the old model for the UE and activates a new model for beam (or beam pair) prediction. Optionally, a MAC CE is used to carry signalling, including a model ID of the old model and a model ID of the new model.

The NW configuring and/or activating a measurement resource adapted to the new model, including at least one of the following:
a beam (or beam pair) prediction range of a set A of the new model;
a measurement resource of a set B of the new model; or
a model monitoring resource of a set C of the new model.

### Option 9

The NW updates a parameter of the model for the UE, that is, performs fine tuning (fine-tuning) on the model through further model training, to enhance beam (or beam pair) prediction performance of the model.

The NW indicating, to the UE, a resource for fine tuning, including:
configuring and/or activating a measurement resource of a set A for updating the model as a universal set for beam (or beam pair) prediction, where the UE may find information about an optimal beam (or beam pair) as a label (label) of the set A by measuring the set A; and
configuring and/or activating a measurement resource of a set B for updating the model as a subset for beam (or beam pair) measurement.

### Option 10

The NW instructs the UE to fall back to a conventional beam management mechanism that is not based on AI or ML.

The UE is instructed to release a measurement resource of the set B (model inputting) and a measurement resource of the set C (model monitoring).

The UE completes conventional beam reporting through conventional beam (or beam pair) measurement.

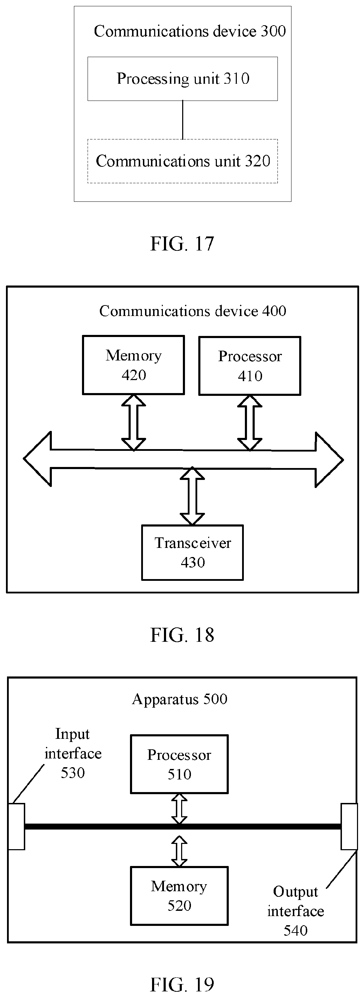

The foregoing describes the method embodiments of this application in detail with reference to FIG. 12 to FIG. 16. The following describes the apparatus embodiments of this application in detail with reference to FIG. 17 to FIG. 20. It should be understood that the apparatus embodiments correspond to the method embodiments. For similar descriptions, one may refer to the method embodiments.

FIG. 17 is a schematic block diagram of a communications device 300 according to an embodiment of this application. The communications device 300 is a first communications device. As shown in FIG. 17, the communications device 300 includes a processing unit 310.

The processing unit 310 is configured to input a first measurement data set into a first network model, to output a first prediction data set, where the first measurement data set includes at least one of the following: identifier information of F spatial filters, or link quality information corresponding to F spatial filters; and the first prediction data set includes at least one of the following: identifier information of K predicted spatial filters in W spatial filters, or link quality information corresponding to K predicted spatial filters in W spatial filters, where F, W, and K are all positive integers, and K < W.

The processing unit 310 is further configured to monitor prediction performance of the first network model according to a measurement result corresponding to a first monitoring signal set, where the first monitoring signal set includes M reference signals, each reference signal in the M reference signals and a reference signal corresponding to at least one spatial filter in the W spatial filters meet a spatial quasi-co-located QCL requirement, and M is a positive integer.

Alternatively, the processing unit 310 is further configured to monitor prediction performance of the first network model according to degrees of confidence corresponding to the K spatial filters that are outputted by the first network model.

In some embodiments, the processing unit 310 is specifically configured to:
in a case in which a spatial filter in the K spatial filters and a first spatial filter meet a QCL requirement, determine that a prediction result of the first network model is accurate; and/or
in a case in which no spatial filter in the K spatial filters and a first spatial filter meet a QCL requirement, determine that a prediction result of the first network model is inaccurate,
where the first spatial filter is an optimal spatial filter included in the measurement result corresponding to the first monitoring signal set, or the first spatial filter is an optimal spatial filter determined based on the measurement result corresponding to the monitoring signal set.

In some embodiments, the measurement result corresponding to the first monitoring signal set includes at least one of the following: identifier information of a spatial filter corresponding to the M reference signals, or link quality information corresponding to the M reference signals; or
the measurement result corresponding to the first monitoring signal set includes identifier information of the optimal spatial filter.

In some embodiments, the measurement result corresponding to the first monitoring signal set is obtained by the first communications device through measurement, or the measurement result corresponding to the first monitoring signal set is obtained by the first communications device from another device.

In some embodiments, the M reference signals include at least one of the following reference signals:
a synchronization signal block SSB, or a channel state information reference signal CSI-RS.

In some embodiments, if a quantity of times that the prediction result of the first network model is inaccurate is greater than or equal to a first threshold within a first time window or first duration, the processing unit 310 is further configured to determine that a model failure of a first type occurs for the first network model; and/or
if prediction accuracy of the first network model is less than a second threshold within a second time window or second duration, the processing unit 310 is further configured to determine that a model failure of a second type occurs for the first network model.

In some embodiments, the processing unit 310 is specifically configured to:
in a case in which a highest degree of confidence in the degrees of confidence corresponding to the K spatial filters is greater than or equal to a third threshold, determine that a prediction result of the first network model is accurate; and/or
in a case in which a highest degree of confidence in the degrees of confidence corresponding to the K spatial filters is less than a third threshold, determine that a prediction result of the first network model is inaccurate.

In some embodiments, the K spatial filters included in the first prediction data set are spatial filters corresponding to first K degrees of confidence ranked in a descending order of degrees of confidence in a confidence vector that is outputted by the first network model,
where a length of the confidence vector is W, each element vⱼ of the confidence vector indicates a degree of confidence that a j^{th} spatial filter in the W spatial filters is an optimal spatial filter, 1 ≤ j ≤ W, and vⱼ ∈ (0,1).

In some embodiments, an output layer of the first network model is a full connection layer with W neurons.

In some embodiments, the processing unit 310 is further configured to: if a quantity of times that the highest degree of confidence in the degrees of confidence corresponding to the K spatial filters is less than the third threshold is greater than or equal to a fourth threshold within a third time window or third duration, determine that a model failure of a third type occurs for the first network model.

In some embodiments, the processing unit 310 is further configured to determine to switch from the first network model to a second network model that has a same function as that implemented by the first network model.

In some embodiments, the communications device 300 further includes: a communications unit 320, configured to transmit first information,
where the first information includes at least one of the following: a model identifier of the first network model, a model failure type corresponding to the first network model, or a model identifier of the second network model.

In some embodiments, the first information is used to request at least one of the following:
configuring and/or activating a spatial filter prediction range of a prediction data set corresponding to the second network model; or
configuring and/or activating a measurement resource of a measurement data set corresponding to the second network model.

In some embodiments, in a case in which the first communications device monitors the prediction performance of the first network model according to the measurement result corresponding to the first monitoring signal set, the first information is further used to request to configure and/or activate a model monitoring resource of a monitoring signal set corresponding to the second network model.

In some embodiments, the communications device 300 further includes: a communications unit 320, configured to transmit second information,
where the second information is used to request to replace the first network model with a network model that has a same function as that implemented by the first network model.

In some embodiments, the second information includes at least one of the following: a model identifier of the first network model, or a model failure type corresponding to the first network model.

In some embodiments, the communications unit 320 is further configured to receive third information,
where the third information is used to instruct to deactivate the first network model and activate a third network model that has the same function as that implemented by the first network model.

In some embodiments, the third information is used to configure and/or activate at least one of the following:
a spatial filter prediction range of a prediction data set corresponding to the third network model; or
a measurement resource of a measurement data set corresponding to the third network model.

In some embodiments, in a case in which the first communications device monitors the prediction performance of the first network model according to the measurement result corresponding to the first monitoring signal set, the third information is further used to configure and/or activate a model monitoring resource of a monitoring signal set corresponding to the third network model.

In some embodiments, the communications device 300 further includes: a communications unit 320, configured to transmit fourth information,
where the fourth information is used to request to update a model parameter of the first network model.

In some embodiments, the communications unit 320 is further configured to receive fifth information, where the fifth information is used to configure and/or activate at least one of the following:
updating a measurement resource of a prediction data set required by the first network model; or
updating a measurement resource of a measurement data set required by the first network model.

In some embodiments, the processing unit 310 is further configured to implement, through a non-network model, a function implemented by the first network model.

In some embodiments, the processing unit 310 is further configured to release a measurement resource of the first measurement data set.

In some embodiments, in a case in which the first communications device monitors the prediction performance of the first network model according to the measurement result corresponding to the first monitoring signal set, the processing unit 310 is further configured to release a monitoring resource of the first monitoring data set.

In some embodiments, the communications device 300 further includes:
a communications unit 320, configured to transmit model monitoring information, where the model monitoring information includes a model identifier of the first network model and a model failure type corresponding to the first network model.

In some embodiments, in a case in which the first communications device monitors the prediction performance of the first network model according to the measurement result corresponding to the first monitoring signal set, the model monitoring information further includes the prediction accuracy of the first network model; or
in a case in which the first communications device monitors the prediction performance of the first network model according to the degrees of confidence corresponding to the K spatial filters, the model monitoring information further includes an average value of a maximum value in the degrees of confidence corresponding to the K spatial filters within fourth duration.

In some embodiments, the prediction accuracy of the first network model included in the model monitoring information is represented by a plurality of quantization intervals; or
the average value of the maximum value in the degrees of confidence corresponding to the K spatial filters included in the model monitoring information within the fourth duration is represented by a plurality of quantization intervals.

In some embodiments, the communications unit 320 is further configured to receive sixth information,
where the sixth information is used to instruct the first communications device to deactivate the first network model and activate a fourth network model that has a same function as that implemented by the first network model.

In some embodiments, the sixth information is used to configure and/or activate at least one of the following:
a spatial filter prediction range of a prediction data set corresponding to the fourth network model; or
a measurement resource of a measurement data set corresponding to the fourth network model.

In some embodiments, in a case in which the first communications device monitors the prediction performance of the first network model according to the measurement result corresponding to the first monitoring signal set, the sixth information is further used to configure and/or activate a model monitoring resource of a monitoring signal set corresponding to the fourth network model.

In some embodiments, the communications unit 320 is further configured to receive seventh information,
where the seventh information is used to indicate a resource for updating a model parameter of the first network model.

In some embodiments, the seventh information is used to configure and/or activate at least one of the following:
updating a measurement resource of a prediction data set required by the first network model; or
updating a measurement resource of a measurement data set required by the first network model.

In some embodiments, the communications unit 320 is further configured to receive eighth information, where the eighth information is used to instruct the first communications device to implement, through a non-network model, a function implemented by the first network model.

In some embodiments, the eighth information is further used to instruct the first communications device to release a measurement resource of the first measurement data set.

In some embodiments, in a case in which the first communications device monitors the prediction performance of the first network model according to the measurement result corresponding to the first monitoring signal set, the eighth information is further used to instruct the first communications device to release a monitoring resource of the first monitoring data set.

In some embodiments, the first communications device is a terminal device.

In some embodiments, the processing unit 310 is further configured to deactivate the first network model, and activate a fifth network model that has a same function as that implemented by the first network model.

In some embodiments, the processing unit 310 is further configured to configure and/or activate at least one of the following:
a spatial filter prediction range of a prediction data set corresponding to the fifth network model; or
a measurement resource of a measurement data set corresponding to the fifth network model.

In some embodiments, the processing unit 310 is further configured to: in a case in which the first communications device monitors the prediction performance of the first network model according to the measurement result corresponding to the first monitoring signal set, configure and/or activate a model monitoring resource of a monitoring signal set corresponding to the fifth network model.

In some embodiments, the processing unit 310 is further configured to determine a resource for updating a model parameter of the first network model.

In some embodiments, the processing unit 310 is further configured to update at least one of the following:
a measurement resource of a prediction data set required by the first network model; or
a measurement resource of a measurement data set required by the first network model.

In some embodiments, the first communications device is a network device.

In some embodiments, the spatial filter includes one transmit spatial filter; or
the spatial filter includes one transmit spatial filter and one receive spatial filter.

In some embodiments, the foregoing communications unit may be a communications interface or a transceiver, or an input/output interface of a communications chip or a system-on-chip. The processing unit may be one or more processors.

It should be understood that the communications device 300 according to this embodiment of this application may correspond to a first communications device in the method embodiments of this application, and the foregoing and other operations and/or functions of units in the communications device 300 are respectively used to implement a corresponding procedure of the first communications device in the method 200 shown in FIG. 12. For brevity, details are not described herein again.

FIG. 18 is a schematic structural diagram of a communications device 400 according to an embodiment of this application. The communications device 400 shown in FIG. 18 includes a processor 410, and the processor 410 may invoke a computer program from a memory and run the computer program to implement the method in embodiments of this application.

In some embodiments, as shown in FIG. 18, the communications device 400 may further include a memory 420. The processor 410 may invoke a computer program from the memory 420 and run the computer program to implement the method in embodiments of this application.

The memory 420 may be a separate component independent of the processor 410, or may be integrated into the processor 410.

In some embodiments, as shown in FIG. 18, the communications device 400 may further include a transceiver 430. The processor 410 may control the transceiver 430 to communicate with another device. Specifically, the processor 410 may transmit information or data to the another device, or receive information or data transmitted by the another device.

The transceiver 430 may include a transmitter and a receiver. The transceiver 430 may further include an antenna, and a quantity of antennas may be one or more.

In some embodiments, the processor 410 may implement a function of a processing unit in the first communications device. For brevity, details are not described herein again.

In some embodiments, the processor 430 may implement a function of a communications unit in the first communications device. For brevity, details are not described herein again.

In some embodiments, the communications device 400 may be specifically the first communications device in embodiments of this application, and the communications device 400 may implement a corresponding procedure implemented by the first communications device in the methods in embodiments of this application. For brevity, details are not described herein again.

FIG. 19 is a schematic structural diagram of an apparatus according to an embodiment of this application. The apparatus 500 shown in FIG. 19 includes a processor 510, and the processor 510 may invoke a computer program from a memory and run the computer program to implement the method in embodiments of this application.

In some embodiments, as shown in FIG. 19, the apparatus 500 may further include a memory 520. The processor 510 may invoke a computer program from the memory 520 and run the computer program to implement the method in embodiments of this application.

The memory 520 may be a separate component independent of the processor 510, or may be integrated into the processor 510.

In some embodiments, the processor 510 may implement a function of a processing unit in the first communications device. For brevity, details are not described herein again.

In some embodiments, the apparatus 500 may further include an input interface 530. The processor 510 may control the input interface 530 to communicate with another device or chip, and specifically, may obtain information or data transmitted by the another device or chip. Optionally, the processor 510 may be located inside or outside a chip.

In some embodiments, the input interface 530 may implement a function of a communications unit in the first communications device.

In some embodiments, the apparatus 500 may further include an output interface 540. The processor 510 may control the output interface 540 to communicate with another device or chip, and specifically, may output information or data to the another device or chip. Optionally, the processor 510 may be located inside or outside a chip.

In some embodiments, the output interface 540 may implement a function of a communications unit in the first communications device.

In some embodiments, the apparatus may be applied to the first communications device in embodiments of this application, and the apparatus may implement a corresponding procedure implemented by the first communications device in the methods in embodiments of this application. For brevity, details are not described herein again.

In some embodiments, the apparatus in embodiments of this application may also be a chip. For example, the chip may be a system-level chip, a system chip, a chip system, or an on-chip system chip.

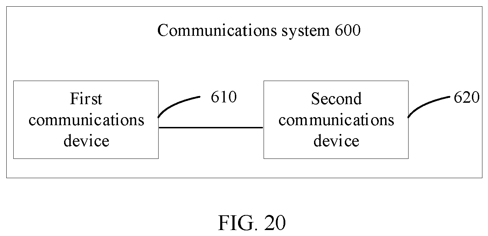

FIG. 20 is a schematic block diagram of a communications system 600 according to an embodiment of this application. As shown in FIG. 20, the communications system 600 includes a first communications device 610 and a second communications device 620.

The first communications device 610 may be configured to implement corresponding functions implemented by the first communications device in the foregoing methods. For brevity, details are not described herein again.

It should be understood that, a processor in embodiments of this application may be an integrated circuit chip having a signal processing capability. In an implementation process, the steps in the foregoing method embodiments may be completed by using an integrated logic circuit of hardware of the processor or instructions in a software form. The processor may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DR RAM). It should be noted that, the memory in the systems and methods described in this specification includes but is not limited to these memories and any memory of another proper type.

It should be understood that, by way of example but not limitative description, for example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in embodiments of this application includes but is not limited to these memories and any memory of another proper type.

An embodiment of this application further provides a computer-readable storage medium, configured to store a computer program.

In some embodiments, the computer-readable storage medium may be applied to the first communications device in embodiments of this application, and the computer program causes a computer to execute a corresponding procedure implemented by the first communications device in the methods in embodiments of this application. For brevity, details are not described herein again.

An embodiment of this application further provides a computer program product, including computer program instructions.

In some embodiments, the computer program product may be applied to the first communications device in embodiments of this application, and the computer program instructions cause a computer to execute a corresponding procedure implemented by the first communications device in the methods in embodiments of this application. For brevity, details are not described herein again.

An embodiment of this application further provides a computer program.

In some embodiments, the computer program may be applied to the first communications device in embodiments of this application. When the computer program runs on a computer, the computer executes a corresponding procedure implemented by the first communications device in the methods in embodiments of this application. For brevity, details are not described herein again.

A person of ordinary skill in the art may be aware that, units and algorithm steps in examples described in combination with embodiments disclosed in this specification can be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, one may refer to a corresponding procedure in the foregoing method embodiments, and details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

Units described as separate components may be or may not be physically separate, and components displayed as units may be or may not be physical units, that is, may be located in one place or distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. For such understanding, the essence of the technical solutions of this application or the part contributing to a conventional technology, or some of the technical solutions may be represented in the form of software products. The computer software products are stored in a storage medium, and include several instructions to enable a computer device (which may be a personal computer, a server, a network device, or the like) to execute all or some of the steps of the methods described in various embodiments of this application. The foregoing storage medium includes various media that may store a program code, such as a USB flash drive, a removable hard disk, a read-only memory (Read-Only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
inputting, by a first communications device, a first measurement data set into a first network model, to output a first prediction data set, wherein the first measurement data set comprises at least one of following: identifier information of F spatial filters, or link quality information corresponding to F spatial filters; and the first prediction data set comprises at least one of following: identifier information of K predicted spatial filters in W spatial filters, or link quality information corresponding to K predicted spatial filters in W spatial filters, wherein F, W, and K are all positive integers, and K < W; and
monitoring, by the first communications device, prediction performance of the first network model according to a measurement result corresponding to a first monitoring signal set, wherein the first monitoring signal set comprises M reference signals, each reference signal in the M reference signals and a reference signal corresponding to at least one spatial filter in the W spatial filters meet a spatial quasi-co-location QCL requirement, and M is a positive integer; or
monitoring, by the first communications device, prediction performance of the first network model according to degrees of confidence corresponding to the K spatial filters that are outputted by the first network model.

2. The method according to claim 1, wherein the monitoring, by the first communications device, the prediction performance of the first network model according to the measurement result corresponding to the first monitoring signal set comprises:
in a case in which a spatial filter in the K spatial filters and a first spatial filter meet the QCL requirement, determining, by the first communications device, that a prediction result of the first network model is accurate; and/or
in a case in which no spatial filter in the K spatial filters and a first spatial filter meet the QCL requirement, determining, by the first communications device, that a prediction result of the first network model is inaccurate,
wherein the first spatial filter is an optimal spatial filter comprised in the measurement result corresponding to the first monitoring signal set, or the first spatial filter is an optimal spatial filter determined based on the measurement result corresponding to the first monitoring signal set.

3. The method according to claim 2, wherein
the measurement result corresponding to the first monitoring signal set comprises at least one of following: identifier information of a spatial filter corresponding to the M reference signals, or link quality information corresponding to the M reference signals; or
the measurement result corresponding to the first monitoring signal set comprises identifier information of the optimal spatial filter.

4. The method according to claim 2 or 3, wherein
the measurement result corresponding to the first monitoring signal set is obtained by the first communications device through measurement, or the measurement result corresponding to the first monitoring signal set is obtained by the first communications device from another device.

5. The method according to any one of claims 2 to 4, wherein
the M reference signals comprise at least one of following reference signals:
a synchronization signal block SSB, or a channel state information reference signal CSI-RS.

6. The method according to any one of claims 2 to 5, wherein the method further comprises:
if a quantity of times that the prediction result of the first network model is inaccurate is greater than or equal to a first threshold within a first time window or first duration, determining, by the first communications device, that a model failure of a first type occurs for the first network model; and/or
if prediction accuracy of the first network model is less than a second threshold within a second time window or second duration, determining, by the first communications device, that a model failure of a second type occurs for the first network model.

7. The method according to claim 1, wherein the monitoring, by the first communications device, the prediction performance of the first network model according to the degrees of confidence corresponding to the K spatial filters that are outputted by the first network model comprises:
in a case in which a highest degree of confidence in the degrees of confidence corresponding to the K spatial filters is greater than or equal to a third threshold, determining, by the first communications device, that a prediction result of the first network model is accurate; and/or
in a case in which a highest degree of confidence in the degrees of confidence corresponding to the K spatial filters is less than a third threshold, determining, by the first communications device, that a prediction result of the first network model is inaccurate.

8. The method according to claim 7, wherein
the K spatial filters comprised in the first prediction data set are spatial filters corresponding to first K degrees of confidence ranked in a descending order of the degrees of confidence in a confidence vector that is outputted by the first network model,
wherein a length of the confidence vector is W, each element vⱼ of the confidence vector indicating a degree of confidence that a j^{th} spatial filter in the W spatial filters is an optimal spatial filter, 1 ≤ j ≤ W, and vⱼ ∈ (0,1).

9. The method according to claim 8, wherein
an output layer of the first network model is a full connection layer with W neurons.

10. The method according to any one of claims 7 to 9, wherein the method further comprises:
if a quantity of times that the highest degree of confidence in the degrees of confidence corresponding to the K spatial filters is less than the third threshold is greater than or equal to a fourth threshold within a third time window or third duration, determining, by the first communications device, that a model failure of a third type occurs for the first network model.

11. The method according to claim 6 or 10, wherein the method further comprises:
determining, by the first communications device, to switch from the first network model to a second network model that has a same function as a function implemented by the first network model.

12. The method according to claim 11, wherein the method further comprises:
transmitting, by the first communications device, first information,
wherein the first information comprises at least one of following: a model identifier of the first network model, a model failure type corresponding to the first network model, or a model identifier of the second network model.

13. The method according to claim 12, wherein
the first information is used to request at least one of following:
configuring and/or activating a spatial filter prediction range of a prediction data set corresponding to the second network model; or
configuring and/or activating a measurement resource of a measurement data set corresponding to the second network model.

14. The method according to claim 13, wherein in a case in which the first communications device monitors the prediction performance of the first network model according to the measurement result corresponding to the first monitoring signal set, the first information is further used to request to configure and/or activate a model monitoring resource of a monitoring signal set corresponding to the second network model.

15. The method according to claim 6 or 10, wherein the method further comprises:
transmitting, by the first communications device, second information,
wherein the second information is used to request to replace the first network model with a network model that has a same function as a function implemented by the first network model.

16. The method according to claim 15, wherein the second information comprises at least one of following: a model identifier of the first network model or a model failure type corresponding to the first network model.

17. The method according to claim 15 or 16, wherein the method further comprises:
receiving, by the first communications device, third information,
wherein the third information is used to instruct to deactivate the first network model and activate a third network model that has a same function as the function implemented by the first network model.

18. The method according to claim 17, wherein
the third information is used to configure and/or activate at least one of following:
a spatial filter prediction range of a prediction data set corresponding to the third network model; or
a measurement resource of a measurement data set corresponding to the third network model.

19. The method according to claim 18, wherein in a case in which the first communications device monitors the prediction performance of the first network model according to the measurement result corresponding to the first monitoring signal set, the third information is further used to configure and/or activate a model monitoring resource of a monitoring signal set corresponding to the third network model.

20. The method according to claim 6 or 10, wherein the method further comprises:
transmitting, by the first communications device, fourth information,
wherein the fourth information is used to request to update a model parameter of the first network model.

21. The method according to claim 20, wherein
receiving, by the first communications device, fifth information,
wherein the fifth information is used to configure and/or activate at least one of following:
updating a measurement resource of a prediction data set required by the first network model; or
updating a measurement resource of a measurement data set required by the first network model.

22. The method according to claim 6 or 10, wherein the method further comprises:
implementing, by the first communications device through a non-network model, a function implemented by the first network model.

23. The method according to claim 22, wherein the method further comprises:
releasing, by the first communications device, a measurement resource of the first measurement data set.

24. The method according to claim 23, wherein in a case in which the first communications device monitors the prediction performance of the first network model according to the measurement result corresponding to the first monitoring signal set, the method further comprises:
releasing, by the first communications device, a monitoring resource of the first monitoring data set.

25. The method according to claim 6 or 10, wherein the method further comprises:
transmitting, by the first communications device, model monitoring information, wherein the model monitoring information comprises a model identifier of the first network model and a model failure type corresponding to the first network model.

26. The method according to claim 25, wherein
in a case in which the first communications device monitors the prediction performance of the first network model according to the measurement result corresponding to the first monitoring signal set, the model monitoring information further comprises the prediction accuracy of the first network model; or
in a case in which the first communications device monitors the prediction performance of the first network model according to the degrees of confidence corresponding to the K spatial filters, the model monitoring information further comprises an average value of a maximum value in the degrees of confidence corresponding to the K spatial filters within fourth duration.

27. The method according to claim 26, wherein
the prediction accuracy of the first network model comprised in the model monitoring information is represented by a plurality of quantization intervals; or
the average value of the maximum value in the degrees of confidence corresponding to the K spatial filters comprised in the model monitoring information within the fourth duration is represented by a plurality of quantization intervals.

28. The method according to any one of claims 25 to 27, wherein
receiving, by the first communications device, sixth information,
wherein the sixth information is used to instruct the first communications device to deactivate the first network model and activate a fourth network model that has a same function as a function implemented by the first network model.

29. The method according to claim 28, wherein
the sixth information is used to configure and/or activate at least one of following:
a spatial filter prediction range of a prediction data set corresponding to the fourth network model; or
a measurement resource of a measurement data set corresponding to the fourth network model.

30. The method according to claim 29, wherein in a case in which the first communications device monitors the prediction performance of the first network model according to the measurement result corresponding to the first monitoring signal set, the sixth information is further used to configure and/or activate a model monitoring resource of a monitoring signal set corresponding to the fourth network model.

31. The method according to any one of claims 25 to 27, wherein the method further comprises:
receiving, by the first communications device, seventh information,
wherein the seventh information is used to indicate a resource for updating a model parameter of the first network model.

32. The method according to claim 31, wherein
the seventh information is used to configure and/or activate at least one of following:
updating a measurement resource of a prediction data set required by the first network model; or
updating a measurement resource of a measurement data set required by the first network model.

33. The method according to any one of claims 25 to 27, wherein the method further comprises:
receiving, by the first communications device, eighth information, wherein the eighth information is used to instruct the first communications device to implement, through a non-network model, a function implemented by the first network model.

34. The method according to claim 33, wherein
the eighth information is further used to instruct the first communications device to release a measurement resource of the first measurement data set.

35. The method according to claim 34, wherein
in a case in which the first communications device monitors the prediction performance of the first network model according to the measurement result corresponding to the first monitoring signal set, the eighth information is further used to instruct the first communications device to release a monitoring resource of the first monitoring data set.

36. The method according to any one of claims 1 to 35, wherein
the first communications device is a terminal device.

37. The method according to claim 6 or 10, wherein the method further comprises:
deactivating, by the first communications device, the first network model, and activating a fifth network model that has a same function as a function implemented by the first network model.

38. The method according to claim 37, wherein the method further comprises:
configuring and/or activating, by the first communications device, at least one of following:
a spatial filter prediction range of a prediction data set corresponding to the fifth network model; or
a measurement resource of a measurement data set corresponding to the fifth network model.

39. The method according to claim 38, wherein in a case in which the first communications device monitors the prediction performance of the first network model according to the measurement result corresponding to the first monitoring signal set, the method further comprises:
configuring and/or activating, by the first communications device, a model monitoring resource of a monitoring signal set corresponding to the fifth network model.

40. The method according to claim 6 or 10, wherein the method further comprises:
determining, by the first communications device, a resource for updating a model parameter of the first network model.

41. The method according to claim 40, wherein the method further comprises:
updating, by the first communications device, at least one of following:
a measurement resource of a prediction data set required by the first network model; or
a measurement resource of a measurement data set required by the first network model.

42. The method according to any one of claims 1 to 10, claims 22 to 24, or claims 37 to 41, wherein
the first communications device is a network device.

43. The method according to any one of claims 1 to 42, wherein
the spatial filter comprises one transmit spatial filter; or
the spatial filter comprises one transmit spatial filter and one receive spatial filter.

44. A communications device, wherein the communications device is a first communications device, and the communications device comprises:
a processing unit, configured to input a first measurement data set into a first network model, to output a first prediction data set, wherein the first measurement data set comprises at least one of following: identifier information of F spatial filters, or link quality information corresponding to F spatial filters; and the first prediction data set comprises at least one of following: identifier information of K predicted spatial filters in W spatial filters, or link quality information corresponding to K predicted spatial filters in W spatial filters, wherein F, W, and K are all positive integers, and K < W;
the processing unit is further configured to monitor prediction performance of the first network model according to a measurement result corresponding to a first monitoring signal set, wherein the first monitoring signal set comprises M reference signals, each reference signal in the M reference signals and a reference signal corresponding to at least one spatial filter in the W spatial filters meet a spatial quasi-co-location QCL requirement, and M is a positive integer; or
the processing unit is further configured to monitor prediction performance of the first network model according to degrees of confidence corresponding to the K spatial filters that are outputted by the first network model.

45. The device according to claim 44, wherein the processing unit is specifically configured to:
in a case in which a spatial filter in the K spatial filters and a first spatial filter meet the QCL requirement, determine that a prediction result of the first network model is accurate; and/or
in a case in which no spatial filter in the K spatial filters and a first spatial filter meet the QCL requirement, determine that a prediction result of the first network model is inaccurate,
wherein the first spatial filter is an optimal spatial filter comprised in the measurement result corresponding to the first monitoring signal set, or the first spatial filter is an optimal spatial filter determined based on the measurement result corresponding to the first monitoring signal set.

46. The device according to claim 45, wherein
the measurement result corresponding to the first monitoring signal set comprises at least one of following: identifier information of a spatial filter corresponding to the M reference signals, or link quality information corresponding to the M reference signals; or
the measurement result corresponding to the first monitoring signal set comprises identifier information of the optimal spatial filter.

47. The device according to claim 45 or 46, wherein
the measurement result corresponding to the first monitoring signal set is obtained by the first communications device through measurement, or the measurement result corresponding to the first monitoring signal set is obtained by the first communications device from another device.

48. The device according to any one of claims 45 to 47, wherein
the M reference signals comprise at least one of following reference signals:
a synchronization signal block SSB, or a channel state information reference signal CSI-RS.

49. The device according to any one of claims 45 to 48, wherein
if a quantity of times that the prediction result of the first network model is inaccurate is greater than or equal to a first threshold within a first time window or first duration, the processing unit is further configured to determine that a model failure of a first type occurs for the first network model; and/or
if prediction accuracy of the first network model is less than a second threshold within a second time window or second duration, the processing unit is further configured to determine that a model failure of a second type occurs for the first network model.

50. The device according to claim 44, wherein the processing unit is specifically configured to:
in a case in which a highest degree of confidence in the degrees of confidence corresponding to the K spatial filters is greater than or equal to a third threshold, determine that a prediction result of the first network model is accurate; and/or
in a case in which a highest degree of confidence in the degrees of confidence corresponding to the K spatial filters is less than a third threshold, determine that a prediction result of the first network model is inaccurate.

51. The device according to claim 50, wherein
the K spatial filters comprised in the first prediction data set are spatial filters corresponding to first K degrees of confidence ranked in a descending order of the degrees of confidence in a confidence vector that is outputted by the first network model,
wherein a length of the confidence vector is W, each element vⱼ of the confidence vector indicating a degree of confidence that a j^{th} spatial filter in the W spatial filters is an optimal spatial filter, 1 ≤ j ≤ W, and vⱼ ∈ (0,1).

52. The device according to claim 51, wherein
an output layer of the first network model is a full connection layer with W neurons.

53. The device according to any one of claims 50 to 52, wherein the processing unit is further configured to: if a quantity of times that the highest degree of confidence in the degrees of confidence corresponding to the K spatial filters is less than the third threshold is greater than or equal to a fourth threshold within a third time window or third duration, determine that a model failure of a third type occurs for the first network model.

54. The device according to claim 49 or 53, wherein the processing unit is further configured to determine to switch from the first network model to a second network model that has a same function as a function implemented by the first network model.

55. The device according to claim 54, wherein the communications device further comprises:
a communications unit, configured to transmit first information,
wherein the first information comprises at least one of following: a model identifier of the first network model, a model failure type corresponding to the first network model, or a model identifier of the second network model.

56. The device according to claim 55, wherein
the first information is used to request at least one of following:
configuring and/or activating a spatial filter prediction range of a prediction data set corresponding to the second network model; or
configuring and/or activating a measurement resource of a measurement data set corresponding to the second network model.

57. The device according to claim 56, wherein in a case in which the first communications device monitors the prediction performance of the first network model according to the measurement result corresponding to the first monitoring signal set, the first information is further used to request to configure and/or activate a model monitoring resource of a monitoring signal set corresponding to the second network model.

58. The device according to claim 49 or 53, wherein the communications device further comprises:
a communications unit, configured to transmit second information,
wherein the second information is used to request to replace the first network model with a network model that has a same function as a function implemented by the first network model.

59. The device according to claim 58, wherein the second information comprises at least one of following: a model identifier of the first network model or a model failure type corresponding to the first network model.

60. The device according to claim 58 or 59, wherein
the communications unit is further configured to receive third information,
wherein the third information is used to instruct to deactivate the first network model and activate a third network model that has a same function as the function implemented by the first network model.

61. The device according to claim 60, wherein
the third information is used to configure and/or activate at least one of following:
a spatial filter prediction range of a prediction data set corresponding to the third network model; or
a measurement resource of a measurement data set corresponding to the third network model.

62. The device according to claim 61, wherein in a case in which the first communications device monitors the prediction performance of the first network model according to the measurement result corresponding to the first monitoring signal set, the third information is further used to configure and/or activate a model monitoring resource of a monitoring signal set corresponding to the third network model.

63. The device according to claim 49 or 53, wherein the communications device further comprises:
a communications unit, configured to transmit fourth information,
wherein the fourth information is used to request to update a model parameter of the first network model.

64. The device according to claim 63, wherein
the communications unit is further configured to receive fifth information,
wherein the fifth information is used to configure and/or activate at least one of following:
updating a measurement resource of a prediction data set required by the first network model; or
updating a measurement resource of a measurement data set required by the first network model.

65. The device according to claim 49 or 53, wherein
the processing unit is further configured to implement, through a non-network model, a function implemented by the first network model.

66. The device according to claim 65, wherein
the processing unit is further configured to release a measurement resource of the first measurement data set.

67. The device according to claim 66, wherein the processing unit is further configured to: in a case in which the first communications device monitors the prediction performance of the first network model according to the measurement result corresponding to the first monitoring signal set, release a monitoring resource of a first monitoring data set.

68. The device according to claim 49 or 53, wherein the communications device further comprises:
a communications unit, configured to transmit model monitoring information, wherein the model monitoring information comprises a model identifier of the first network model and a model failure type corresponding to the first network model.

69. The device according to claim 68, wherein
in a case in which the first communications device monitors the prediction performance of the first network model according to the measurement result corresponding to the first monitoring signal set, the model monitoring information further comprises the prediction accuracy of the first network model; or
in a case in which the first communications device monitors the prediction performance of the first network model according to the degrees of confidence corresponding to the K spatial filters, the model monitoring information further comprises an average value of a maximum value in the degrees of confidence corresponding to the K spatial filters within fourth duration.

70. The device according to claim 69, wherein
the prediction accuracy of the first network model comprised in the model monitoring information is represented by a plurality of quantization intervals; or
the average value of the maximum value in the degrees of confidence corresponding to the K spatial filters comprised in the model monitoring information within the fourth duration is represented by a plurality of quantization intervals.

71. The device according to any one of claims 68 to 70, wherein
the communications unit is further configured to receive sixth information,
wherein the sixth information is used to instruct the first communications device to deactivate the first network model and activate a fourth network model that has a same function as a function implemented by the first network model.

72. The device according to claim 71, wherein
the sixth information is used to configure and/or activate at least one of following:
a spatial filter prediction range of a prediction data set corresponding to the fourth network model; or
a measurement resource of a measurement data set corresponding to the fourth network model.

73. The device according to claim 72, wherein in a case in which the first communications device monitors the prediction performance of the first network model according to the measurement result corresponding to the first monitoring signal set, the sixth information is further used to configure and/or activate a model monitoring resource of a monitoring signal set corresponding to the fourth network model.

74. The device according to any one of claims 68 to 70, wherein
the communications unit is further configured to receive seventh information,
wherein the seventh information is used to indicate a resource for updating a model parameter of the first network model.

75. The device according to claim 74, wherein
the seventh information is used to configure and/or activate at least one of following:
updating a measurement resource of a prediction data set required by the first network model; or
updating a measurement resource of a measurement data set required by the first network model.

76. The device according to any one of claims 68 to 70, wherein
the communications unit is further configured to receive eighth information, wherein the eighth information is used to instruct the first communications device to implement, through a non-network model, a function implemented by the first network model.

77. The device according to claim 76, wherein
the eighth information is further used to instruct the first communications device to release a measurement resource of the first measurement data set.

78. The device according to claim 77, wherein
in a case in which the first communications device monitors the prediction performance of the first network model according to the measurement result corresponding to the first monitoring signal set, the eighth information is further used to instruct the first communications device to release a monitoring resource of the first monitoring data set.

79. The device according to any one of claims 44 to 78, wherein
the first communications device is a terminal device.

80. The device according to claim 49 or 53, wherein
the processing unit is further configured to deactivate the first network model and activate a fifth network model that has a same function as a function implemented by the first network model.

81. The device according to claim 80, wherein
the processing unit is further configured to configure and/or activate at least one of following:
a spatial filter prediction range of a prediction data set corresponding to the fifth network model; or
a measurement resource of a measurement data set corresponding to the fifth network model.

82. The device according to claim 81, wherein the processing unit is further configured to: in a case in which the first communications device monitors the prediction performance of the first network model according to the measurement result corresponding to the first monitoring signal set, configure and/or activate a model monitoring resource of a monitoring signal set corresponding to the fifth network model.

83. The device according to claim 44 or 53, wherein the processing unit is further configured to determine a resource for updating a model parameter of the first network model.

84. The device according to claim 83, wherein the device further comprises:
the first communications device is further configured to update at least one of following:
a measurement resource of a prediction data set required by the first network model; or
a measurement resource of a measurement data set required by the first network model.

85. The device according to any one of claims 44 to 53, claims 65 to 67, or claims 80 to 84, wherein
the first communications device is a network device.

86. The device according to any one of claims 44 to 85, wherein
the spatial filter comprises one transmit spatial filter; or
the spatial filter comprises one transmit spatial filter and one receive spatial filter.

87. A communications device, comprising a processor and a memory, wherein the memory is configured to store a computer program, and the processor is configured to invoke and run the computer program stored in the memory, to cause the communications device to execute the method according to any one of claims 1 to 43.

88. A chip, comprising a processor, configured to invoke a computer program from a memory and run the computer program, to cause a device on which the chip is installed to execute the method according to any one of claims 1 to 43.

89. A computer-readable storage medium, configured to store a computer program, wherein when the computer program is executed, the method according to any one of claims 1 to 43 is implemented.

90. A computer program product, comprising computer program instructions, wherein when the computer program instructions are executed, the method according to any one of claims 1 to 43 is implemented.

91. A computer program, wherein when the computer program is executed, the method according to any one of claims 1 to 43 is implemented.
